# EUROPEAN PATENT SPECIFICATION

(11) **EP 3 951 599 B1**
(45) Date of publication and mention of the grant of the patent: **28.10.2026**
(21) Application number: 20790944.1
(22) Date of filing: 14.04.2020
(51) Int. Cl.: G06F 11/14, G06F 11/07, G01R 31/317, G06F 21/44

(54) **USER TERMINAL, DEBUGGING APPARATUS, AND DATA BACKUP METHOD**
BENUTZERENDGERÄT, FEHLERBESEITIGUNGSGERÄT UND DATENSICHERUNGSVERFAHREN
TERMINAL UTILISATEUR, APPAREIL DE DÉBOGAGE ET PROCÉDÉ DE SAUVEGARDE DE DONNÉES

(30) Priority: 18.04.2019 CN 201910314417
(43) Date of publication of application: 09.02.2022
(73) Proprietor: Huawei Technologies Co., Ltd., Shenzhen, Guangdong 518129 (CN)
(72) Inventor: YI, Hongbin, Shenzhen, Guangdong 518129 (CN); WANG, Jinfeng, Shenzhen, Guangdong 518129 (CN)
(74) Representative: Gill Jennings & Every LLP
(86) International application number: PCT/CN2020/084641
(87) International publication number: WO 2020/211740

(56) References cited:
- WO-A1-2018/133242
- CN-A- 101 178 636
- CN-A- 101 674 331
- CN-A- 105 068 892
- CN-A- 108 496 158
- US-A1- 2004 044 864
- US-A1- 2004 128 456
- US-A1- 2004 153 914
- US-A1- 2006 156 099
- US-A1- 2016 187 420
- US-B2- 9 606 175
- FUKUSHI M. ET AL: "A Self-Reconfigurable Hardware Architecture for Mesh Arrays Using Single/Double Vertical Track Switches", IEEE TRANSACTIONS ON INSTRUMENTATION AND MEASUREMENT IEEE, USA, vol. 53, no. 2, 1 April 2004 (2004-04-01), pages 357 - 367, XP011110744, ISSN: 0018-9456, DOI: 10.1109/TIM.2003.822717

## Description

### TECHNICAL FIELD

This application relates to the field of computer technologies, and in particular, to a user terminal, a debugging device, and a data backup method.

### BACKGROUND

Currently, a storage component (for example, a hard disk) of a user terminal is usually mounted on an input/output (I/O) controller in a system on chip (SoC). When a user needs to back up data in the storage device, the user may connect a data backup device to the I/O controller through an interface (for example, a universal serial bus type-C (USB Type-C) interface) of the user terminal. In this way, the backup device may read the data in the storage device by using the I/O controller, to back up the data in the storage device to the backup device.

However, when the I/O controller of the user terminal is faulty, the user cannot back up the data in the storage device.

US 2016/0187420 A1 discloses a device and a debug tool, the device comprising an external port and a port controller, the debug tool is coupled to the external port of the device, and a debug computing system may direct/control the reprogramming of the port controller via the debug tool and the external port. WO 2018/133242A1 discloses a terminal including a USB Type-C interface and a main control chip, where the main control chip includes a debugging unit and a multi-channel analog switch, the multi-channel analog switch is connected to the debugging unit and the USB Type-C interface respectively, and the multi-channel analog switch is used to connect or disconnect the debug unit and the USB Type-C interface connection.

### SUMMARY

Embodiments of this application provide a user terminal and a data backup method, so that data in a storage device can be backed up when an I/O controller of the user terminal is faulty. The technical solutions are as follows:
According to a first aspect, a user terminal is provided, and the user terminal includes a storage component, an I/O controller, a main controller, a first CC controller, a first MUX, a second MUX, a third MUX, and a first interface.

The first CC controller is connected to each of the first interface and a first signal selection input end of the first MUX, and is configured to send a first signal switching instruction to the first MUX when detecting that a debugging device is connected to the first interface of the user terminal.

A first signal input end of the first MUX is connected to the I/O controller, a second signal input end of the first MUX is connected to the main controller, and a first signal output end of the first MUX is connected to the first interface; and the first MUX is configured to connect the second signal input end to the first signal output end when receiving the first signal switching instruction, so that the main controller receives, through the first interface, a data backup instruction sent by the debugging device.

The main controller is connected to each of a second signal selection input end of the second MUX and a third signal selection input end of the third MUX, and is configured to: when receiving the data backup instruction, send a second signal switching instruction to the second MUX, and send a third signal switching instruction to the third MUX.

A third signal input end of the second MUX is connected to the I/O controller, a fourth signal input end of the second MUX is connected to a sixth signal input end of the third MUX, and a second signal output end of the second MUX is connected to the storage component; and the second MUX is configured to connect the fourth signal input end to the second signal output end when receiving the second signal switching instruction.

A fifth signal input end of the third MUX is connected to the I/O controller, and a third signal output end of the third MUX is connected to the first interface; and the third MUX is configured to connect the sixth signal input end to the third signal output end when receiving the third signal switching instruction.

The storage component is configured to: when the fourth signal input end of the second MUX is connected to the second signal output end of the second MUX, and the sixth signal input end of the third MUX is connected to the third signal output end of the third MUX, receive an I/O instruction sent by the debugging device, and perform data backup processing according to the I/O instruction.

In a possible implementation, when the storage component is a storage component of a bus and interface standard PCIe type, the user terminal further includes a clock selector and a fourth MUX. The main controller is connected to each of a fourth signal selection input end of the clock selector and a fifth signal selection input end of the fourth MUX, and is configured to: when receiving the data backup instruction, send a fourth signal switching instruction to the clock selector, and send a fifth signal switching instruction to the fourth MUX.

A seventh signal input end of the clock selector is connected to the I/O controller, an eighth signal input end of the clock selector is connected to a tenth signal input end of the fourth MUX, and a fourth signal output end of the clock selector is connected to the storage component; and the clock selector is configured to connect the eighth signal input end to the fourth signal output end when receiving the fourth signal switching instruction.

A ninth signal input end of the fourth MUX is connected to the I/O controller, and a fifth signal output end of the fourth MUX is connected to the first interface; and the fourth MUX is configured to connect the tenth signal input end to the fifth signal output end when receiving the fifth signal switching instruction.

The storage component is further configured to: when the eighth signal input end of the clock selector is connected to the fourth signal output end of the clock selector, and the tenth signal input end of the fourth MUX is connected to the fifth signal output end of the fourth MUX, receive a clock signal sent by the debugging device, to implement clock synchronization between the storage component and the debugging device.

In a possible implementation, the user terminal further includes an authentication information input component connected to the main controller.

The main controller is further configured to: when receiving the data backup instruction, send an authentication request instruction to the authentication information input component.

The authentication information input component is configured to: when receiving the authentication request instruction, collect authentication information of a user, and send an authentication response instruction to the main controller, where the authentication response instruction carries the authentication information.

The main controller is further configured to: when receiving the authentication response instruction, perform authentication on the user based on the authentication information and prestored user information, and if the authentication succeeds, send the second signal switching instruction to the second MUX, and send the third signal switching instruction to the third MUX.

According to a second aspect, a user terminal is provided, and the user terminal includes a storage component, an I/O controller, a main controller, an interface controller, a first MUX, a second MUX, and a first interface.

The main controller is connected to each of a first signal selection input end of the first MUX and a second signal selection input end of the second MUX, and is configured to: when receiving a data backup request instruction of a user, send a first signal switching instruction to the first MUX, and send a second signal switching instruction to the second MUX.

A first signal input end of the first MUX is connected to the I/O controller, a second signal input end of the first MUX is connected to the interface controller, and a first signal output end of the first MUX is connected to the storage component; and the first MUX is configured to connect the second signal input end to the first signal output end when receiving the first signal switching instruction.

A third signal input end of the second MUX is connected to the I/O controller, a fourth signal input end of the second MUX is connected to the interface controller, and a second signal output end of the second MUX is connected to the first interface; and the second MUX is configured to connect the fourth signal input end to the second signal output end when receiving the second signal switching instruction.

The interface controller is configured to: when the second signal input end of the first MUX is connected to the first signal output end of the first MUX, and the fourth signal input end of the second MUX is connected to the second signal output end of the second MUX, send an I/O instruction to the storage component to perform data backup processing.

In a possible implementation, when the storage component is a storage component of a bus and interface standard PCIe type, the user terminal further includes a clock selector.

The main controller is connected to a third signal selection input end of the clock selector, and is configured to send a third signal switching instruction to the clock selector when receiving a data backup instruction.

A fifth signal input end of the clock selector is connected to the I/O controller, a sixth signal input end of the clock selector is connected to the interface controller, and a third signal output end of the clock selector is connected to the storage component; and the clock selector is configured to connect the sixth signal input end to the third signal output end when receiving the third signal switching instruction.

The storage component is further configured to: when the sixth signal input end of the clock selector is connected to the third signal output end of the clock selector, receive a clock signal sent by the interface controller, to implement clock synchronization between the storage component and the interface controller.

In a possible implementation, the user terminal further includes an authentication information input component connected to the main controller.

The main controller is further configured to: when receiving the data backup instruction, send an authentication request instruction to the authentication information input component.

The authentication information input component is configured to: when receiving the authentication request instruction, collect authentication information of a user, and send an authentication response instruction to the main controller, where the authentication response instruction carries the authentication information.

The main controller is further configured to: when receiving the authentication response instruction, perform authentication on the user based on the authentication information and prestored user information, and if the authentication succeeds, send the first signal switching instruction to the first MUX, and send the second signal switching instruction to the second MUX. According to a third aspect, a data backup method is provided. The method is applied to the user terminal according to the first aspect, and the method includes:
A first CC controller sends a first signal switching instruction to a first MUX when detecting that a debugging device is connected to a first interface of the user terminal.

The first MUX receives the first signal switching instruction, and connects a second signal input end to a first signal output end according to the first signal switching instruction, so that a main controller receives, through the first interface, a data backup instruction sent by the debugging device.

When receiving the data backup instruction, the main controller sends a second signal switching instruction to a second MUX, and sends a third signal switching instruction to a third MUX.

The second MUX receives the second signal switching instruction, and connects a fourth signal input end to the second signal output end according to the second signal switching instruction.

The third MUX receives the third signal switching instruction, and connects the sixth signal input end to the third signal output end according to the third signal switching instruction.

The storage component receives an I/O instruction sent by the debugging device, and performs data backup processing according to the I/O instruction.

In a possible implementation, when the storage component is a storage component of a bus and interface standard PCIe type, the user terminal further includes a clock selector and a fourth MUX; and the method further includes:
When receiving the data backup instruction, the main controller sends a fourth signal switching instruction to the clock selector, and sends a fifth signal switching instruction to the fourth MUX. The clock selector receives the fourth signal switching instruction, and connects the eighth signal input end to the fourth signal output end according to the fourth signal switching instruction.

The fourth MUX receives the fifth signal switching instruction, and connects the tenth signal input end to the fifth signal output end according to the fifth signal switching instruction.

The storage component receives a clock signal sent by the debugging device, to implement clock synchronization between the storage component and the debugging device.

In a possible implementation, the user terminal further includes an authentication information input component connected to the main controller; and the method further includes:
When receiving the data backup instruction, the main controller sends an authentication request instruction to the authentication information input component.

When receiving the authentication request instruction, the authentication information input component collects authentication information of a user, and sends an authentication response instruction to the main controller, where the authentication response instruction carries the authentication information.

When receiving the authentication response instruction, the main controller performs authentication on the user based on the authentication information and prestored user information, and if the authentication succeeds, sends the second signal switching instruction to the second MUX, and sends the third signal switching instruction to the third MUX.

According to a fourth aspect, a data backup method is provided. The method is applied to the user terminal according to the second aspect, and the method includes:
When detecting a data backup request instruction of a user, a main controller sends a first signal switching instruction to a first MUX, and sends a second signal switching instruction to a second MUX.

The first MUX receives the first signal switching instruction, and connects the second signal input end to the first signal output end according to the first signal switching instruction.

The second MUX receives the second signal switching instruction, and connects a fourth signal input end to the second signal output end according to the second signal switching instruction.

When the second signal input end of the first MUX is connected to the first signal output end of the first MUX, and the fourth signal input end of the second MUX is connected to the second signal output end of the second MUX, the interface controller sends an I/O instruction to a storage component to perform data backup processing.

In a possible implementation, when the storage component is a storage component of a bus and interface standard PCIe type, the user terminal further includes a clock selector; and the method further includes:
The main controller sends a third signal switching instruction to the clock selector when receiving a data backup instruction.

The clock selector receives the third signal switching instruction, and connects a sixth signal input end to a third signal output end according to the third signal switching instruction.

The storage component receives a clock signal sent by the interface controller, to implement clock synchronization between the storage component and the interface controller.

In a possible implementation, the user terminal further includes an authentication information input component connected to the main controller; and the method further includes:
When receiving the data backup instruction, the main controller sends an authentication request instruction to the authentication information input component.

When receiving the authentication request instruction, the authentication information input component collects authentication information of a user, and sends an authentication response instruction to the main controller, where the authentication response instruction carries the authentication information.

When receiving the authentication response instruction, the main controller performs authentication on the user based on the authentication information and prestored user information, and if the authentication succeeds, sends the first signal switching instruction to the first MUX, and sends the second signal switching instruction to the second MUX.

In the embodiments of this application, when the I/O controller of the user terminal is faulty, a skilled person may connect the debugging device to the first interface of the user terminal. In this case, the first CC controller sends the first signal switching instruction to the first MUX when detecting that the debugging device is connected to the first interface of the user terminal. After receiving the first signal switching instruction, the first MUX connects the second signal input end to the first signal output end, so that the main controller is connected to the debugging device through the first interface. Subsequently, the skilled person sends the data backup instruction to the main controller by using the debugging device. After receiving the data backup instruction, the main controller sends the second signal switching instruction to the second MUX, and sends the third signal switching instruction to the third MUX. After receiving the second signal switching instruction, the second MUX connects the fourth signal input end to the second signal output end. Similarly, after receiving the third signal switching instruction, the third MUX connects the sixth signal input end to the third signal output end. In this way, when the I/O controller of the user terminal is faulty, the skilled person may directly send the I/O instruction to the storage component by using the debugging device, to back up data in the storage component to a backup device connected to the debugging device.

### BRIEF DESCRIPTION OF DRAWINGS

FIG. 1 is a schematic structural diagram in which a user terminal is externally connected to a debugging device according to an embodiment of this application;
FIG. 2 is a flowchart of a data backup method according to an embodiment of this application;
FIG. 3 is a flowchart of a data backup method according to an embodiment of this application;
FIG. 4 is a schematic structural diagram of a user terminal according to an embodiment of this application; and
FIG. 5 is a flowchart of a data backup method according to an embodiment of this application.

### DESCRIPTION OF EMBODIMENTS

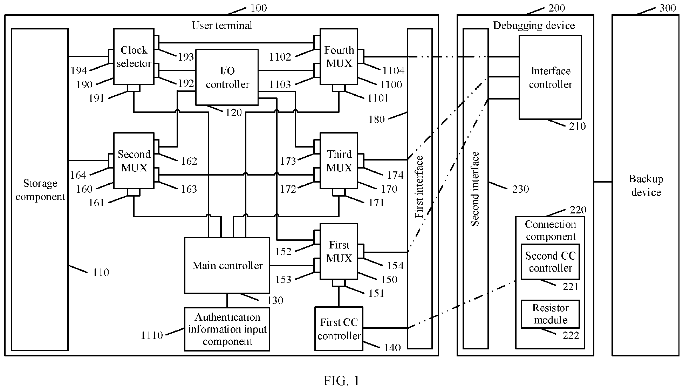

FIG. 1 is a schematic structural diagram in which a user terminal is externally connected to a debugging device according to an embodiment of this application. As shown in FIG. 1, a user terminal 100 provided in this embodiment of this application includes a storage component 110, an input/output (input/output, I/O) controller 120, a main controller 130, a first configuration channel (configuration channel, CC) controller 140, a first multiplexer (multiplexer, MUX) 150, a second MUX 160, a third MUX 170, and a first interface 180. The storage component 110 may be a storage component of a peripheral component interconnect express (PCIe) type, may be a storage component of a serial advanced technology attachment (serial advanced technology attachment, SATA) type, or may be a storage component of another type. This is not limited in this embodiment of this application. The first interface 180 may be a type-C first interface, or may be a first interface of another type. This is not limited in this embodiment of this application. The following describes in detail connection relationships between and functions of the storage component 110, the I/O controller 120, the main controller 130, the first CC controller 140, the first MUX 150, the second MUX 160, the third MUX 170, and the first interface 180 that are of the user terminal 100. Details are as follows:
The first CC controller 140 is connected to each of the first interface 180 and a first signal selection input end 151 of the first MUX 150, and is configured to send a first signal switching instruction to the first MUX 150 when detecting that a debugging device 200 is connected to the first interface 180 of the user terminal 100.

A first signal input end 152 of the first MUX 150 is connected to the I/O controller 120, a second signal input end 153 of the first MUX 150 is connected to the main controller 130, and a first signal output end 154 of the first MUX 150 is connected to the first interface 180; and the first MUX 150 is configured to connect the second signal input end 153 to the first signal output end 154 when receiving the first signal switching instruction, so that the main controller 130 receives, through the first interface 180, a data backup instruction sent by the debugging device 200.

The main controller 130 is connected to each of a second signal selection input end 161 of the second MUX 160 and a third signal selection input end 171 of the third MUX 170, and is configured to: when receiving the data backup instruction, send a second signal switching instruction to the second MUX 160, and send a third signal switching instruction to the third MUX 170.

A third signal input end 162 of the second MUX 160 is connected to the I/O controller 120, a fourth signal input end 163 of the second MUX 160 is connected to a sixth signal input end 172 of the third MUX 170, and a second signal output end 164 of the second MUX 160 is connected to the storage component 110; and the second MUX 160 is configured to connect the fourth signal input end 163 to the second signal output end 164 when receiving the second signal switching instruction.

A fifth signal input end 173 of the third MUX 170 is connected to the I/O controller 120, and a third signal output end 174 of the third MUX 170 is connected to the first interface 180; and the third MUX 170 is configured to connect the sixth signal input end 172 to the third signal output end 174 when receiving the third signal switching instruction.

The storage component 110 is configured to: when the fourth signal input end 163 of the second MUX 160 is connected to the second signal output end 164 of the second MUX 160, and the sixth signal input end 172 of the third MUX 170 is connected to the third signal output end 174 of the third MUX 170, receive an I/O instruction sent by the debugging device 200, and perform data backup processing according to the I/O instruction.

In an implementation, when the I/O controller 120 of the user terminal 100 works normally, the first signal input end 152 of the first MUX 150 is connected to the first signal output end 154 of the first MUX 150, the third signal input end 162 of the second MUX 160 is connected to the second signal output end 164 of the second MUX 160, and the fifth signal input end 173 of the third MUX 170 is connected to the third signal output end 174 of the third MUX 170. In this case, a skilled person may directly connect a backup device 300 to the first interface 180 of the user terminal 100, and send an I/O instruction to the storage component 110 by using the I/O controller 120, to back up data in the storage component 110 to the backup device 300.

However, when the I/O controller 120 of the user terminal 100 is faulty, the skilled person may connect the debugging device 200 to the first interface 180 of the user terminal 100. In this case, the first CC controller 140 sends the first signal switching instruction to the first MUX 150 when detecting that the debugging device 200 is connected to the first interface 180 of the user terminal 100. After receiving the first signal switching instruction, the first MUX 150 connects the second signal input end 153 to the first signal output end 154, so that the main controller 130 is connected to the debugging device 200 through the first interface 180. Subsequently, the skilled person sends the data backup instruction to the main controller 130 by using the debugging device 200. After receiving the data backup instruction, the main controller 130 sends the second signal switching instruction to the second MUX 160, and sends the third signal switching instruction to the third MUX 170. After receiving the second signal switching instruction, the second MUX 160 connects the fourth signal input end 163 to the second signal output end 164. Similarly, after receiving the third signal switching instruction, the third MUX 170 connects the sixth signal input end 172 to the third signal output end 174. In this way, when the I/O controller 120 of the user terminal 100 is faulty, the skilled person may directly send the I/O instruction to the storage component 110 by using the debugging device 200, to back up data in the storage component 110 to the backup device 300 connected to the debugging device 200.

Optionally, the user terminal 100 further includes an authentication information input component 1110 connected to the main controller 130.

The main controller 130 is further configured to: when receiving the data backup instruction, send an authentication request instruction to the authentication information input component 1110.

The authentication information input component 1110 is configured to: when receiving the authentication request instruction, collect authentication information of a user, and send an authentication response instruction to the main controller 130, where the authentication response instruction carries the authentication information.

The main controller 130 is further configured to: when receiving the authentication response instruction, perform authentication on the user based on the authentication information and prestored user information, and if the authentication succeeds, send the second signal switching instruction to the second MUX 160, and send the third signal switching instruction to the third MUX 170.

In an implementation, the main controller 130 may prestore the user information, where the user information may be fingerprint information, a password, or the like. When the main controller 130 receives the data backup instruction, the main controller 130 may send the authentication request instruction to the authentication information input component 1110, to ensure security of the data in the storage component 110. Then, after receiving the authentication request instruction, the authentication information input component 1110 may collect the authentication information of the user, and send the authentication response instruction to the main controller 130, where the authentication response instruction carries the authentication information. Subsequently, after receiving the authentication response instruction, the main controller 130 may parse the authentication response instruction, to learn that the authentication response instruction carries the authentication information. After obtaining the authentication information, the main controller 130 may query whether the authentication information exists in the prestored user information. If the authentication information exists in the prestored user information, it indicates that the authentication succeeds. In this case, the main controller 130 may further send the second signal switching instruction to the second MUX 160, and send the third signal switching instruction to the third MUX 170.

It should be noted that the user terminal 100 may further include a display connected to the main controller 130. When the main controller 130 receives the data backup instruction, the main controller 130 may further prompt, through the display, the user to enter the authentication information.

In addition, the display may be further disposed in the debugging device 200. When the main controller 130 receives the data backup instruction, the main controller 130 may send a display instruction to the debugging device 200, so that the display prompts the user to enter the authentication information.

Optionally, when the storage component 110 is a storage component of a PCIe type, the user terminal 100 further includes a clock selector 190 and a fourth MUX 1100.

The main controller 130 is connected to each of a fourth signal selection input end 191 of the clock selector 190 and a fifth signal selection input end 1101 of the fourth MUX 1100, and is configured to: when receiving the data backup instruction, send a fourth signal switching instruction to the clock selector 190, and send a fifth signal switching instruction to the fourth MUX 1100.

A seventh signal input end 192 of the clock selector 190 is connected to the I/O controller 120, an eighth signal input end 193 of the clock selector 190 is connected to a tenth signal input end 1102 of the fourth MUX 1100, and a fourth signal output end 194 of the clock selector 190 is connected to the storage component 110; and the clock selector 190 is configured to connect the eighth signal input end 193 to the fourth signal output end 194 when receiving the fourth signal switching instruction.

A ninth signal input end 1103 of the fourth MUX 1100 is connected to the I/O controller 120, and a fifth signal output end 1104 of the fourth MUX 1100 is connected to the first interface 180; and the fourth MUX 1100 is configured to connect the tenth signal input end 1102 to the fifth signal output end 1104 when receiving the fifth signal switching instruction.

The storage component 110 is further configured to: when the eighth signal input end 193 of the clock selector 190 is connected to the fourth signal output end 194 of the clock selector 190, and the tenth signal input end 1102 of the fourth MUX 1100 is connected to the fifth signal output end 1104 of the fourth MUX 1100, receive a clock signal sent by the debugging device 200, to implement clock synchronization between the storage component 110 and the debugging device 200.

In an implementation, when the I/O controller 120 of the user terminal 100 works normally, the seventh signal input end 192 of the clock selector 190 is connected to the fourth signal output end 194 of the clock selector 190, and the ninth signal input end 1103 of the fourth MUX 1100 is connected to the fifth signal output end 1104 of the fourth MUX 1100. In this case, the I/O controller 120 may send clock information to the storage component 110, to ensure clock synchronization between the storage component 110 and the I/O controller 120.

However, when the I/O controller 120 of the user terminal 100 is faulty, a skilled person sends the data backup instruction to the main controller 130 by using the debugging device 200. After receiving the data backup instruction, the main controller 130 sends the fourth signal switching instruction to the clock selector 190, and sends the fifth signal switching instruction to the fourth MUX 1100. After receiving the fourth signal switching instruction, the clock selector 190 connects the eighth signal input end 193 to the fourth signal output end 194. Similarly, after receiving the fifth signal switching instruction, the fourth MUX 1100 connects the tenth signal input end 1102 to the fifth signal output end 1104. In this way, when the I/O controller 120 of the user terminal 100 is faulty, the debugging device 200 may directly send the clock signal to the storage component 110, to ensure clock synchronization between the storage component 110 and the debugging device 200.

Refer to FIG. 1. The debugging device 200 provided in this embodiment of this application includes an interface controller 210, a connection component 220, and a second interface 230. The second interface 230 may be a type-C second interface, or may be a second interface of another type. This is not limited in this embodiment of this application. The following describes in detail connection relationships between and functions of the interface controller 210, the connection component 220, and the second interface 230 that are of the debugging device 200. Details are as follows:
The connection component 220 is connected to the second interface 230, and is configured to: after the second interface 230 is connected to the first interface 180 of the user terminal 100, enable the user terminal 100 to detect that the debugging device 200 is connected to the user terminal.

The interface controller 210 is connected to the second interface 230, and is configured to send a data backup instruction to the main controller 130 of the user terminal 100 when detecting a data backup request instruction of a user.

The interface controller 210 is further configured to send an I/O instruction to the storage component 110 of the user terminal 100 to perform data backup processing.

In an implementation, when the I/O controller 120 of the user terminal 100 is faulty, a skilled person may connect the second interface 230 of the debugging device 200 to the first interface 180 of the user terminal 100. In this case, the first CC controller 140 detects, by using the connection component 220 of the debugging device 200, that the debugging device 200 is connected to the user terminal 100, and sends the first signal switching instruction to the first MUX 150. After receiving the first signal switching instruction, the first MUX 150 connects the second signal input end 153 to the first signal output end 154, so that the main controller 130 is connected to the interface controller 210 of the debugging device 200. Subsequently, when detecting the data backup request instruction of the user, the interface controller 210 sends the data backup instruction to the main controller 130. After receiving the data backup instruction, the main controller 130 sends the second signal switching instruction to the second MUX 160, and sends the third signal switching instruction to the third MUX 170. After receiving the second signal switching instruction, the second MUX 160 connects the fourth signal input end 163 to the second signal output end 164. Similarly, after receiving the third signal switching instruction, the third MUX 170 connects the sixth signal input end 172 to the third signal output end 174. In this way, when the I/O controller 120 of the user terminal 100 is faulty, the skilled person may directly send the I/O instruction to the storage component 110 by using the interface controller 210 of the debugging device 200, to back up data in the storage component 110 to the backup device 300 connected to the debugging device 200.

It should be noted that a data backup request button may be further disposed in the debugging device 200. The interface controller 210 may monitor a level status of the data backup request button through a GPIO. When detecting, through the GPIO, that a level of the data backup request button is a high level, the interface controller 210 determines that the user initiates a data backup request. The interface controller 210 may further monitor level statuses of a plurality of data backup request buttons through a plurality of GPIOs. When detecting, through a GPIO, that a level of a specific data backup request button is a high level, the interface controller 210 determines that the user initiates a data backup request.

Optionally, the first CC controller 140 may detect, by using the connection component 220 of the debugging device 200 in various manners, that the debugging device 200 is connected to the user terminal 100. This embodiment of this application provides two feasible implementations. Details are as follows:
Implementation 1: The connection component 220 includes a second CC controller 221. The second CC controller 221 is connected to the second interface 230, and is configured to: after the second interface 230 is connected to the first interface 180 of the user terminal 100, send a connection instruction to the first CC controller 140 of the user terminal 100 through the second interface 230, so that after receiving the connection instruction, the first CC controller 140 determines that the debugging device 200 is connected to the user terminal 100.

In an implementation, when the second interface 230 of the debugging device 200 is connected to the first interface 180 of the user terminal 100, the second CC controller 221 is connected to the first CC controller 140. The second CC controller 221 sends the connection instruction to the first CC controller 140. After receiving the connection instruction, the first CC controller 140 determines that the debugging device 200 is connected to the user terminal 100. The connection instruction may be a structured vendor defined message (structured vendor defined message, VDM) or an unstructured vendor defined message (unstructured vendor defined message, UVDM).

Optionally, the second CC controller 221 may prestore a first key. When the second interface 230 of the debugging device 200 is connected to the first interface 180 of the user terminal 100, the second CC controller 221 may send an encrypted connection instruction to the first CC controller 140. The encrypted connection instruction is obtained after the second CC controller 221 encrypts the connection instruction based on the prestored first key. Correspondingly, the first CC controller 140 may prestore a second key corresponding to the first key. When receiving the encrypted connection instruction, the first CC controller 140 may decrypt the encrypted connection instruction based on the prestored second key. If the decryption succeeds, the first CC controller 140 determines that authentication on the debugging device 200 succeeds. If the decryption fails, the first CC controller 140 determines that authentication on the debugging device 200 fails.

Implementation 2: The connection component 220 includes a resistor module 222. The resistor module 222 is connected to the second interface 230, and is configured to: after the debugging device 200 is connected to the first interface 180 of the user terminal 100 through the second interface 230, enable the first CC controller 140 of the user terminal 100 to switch from a high potential to a low potential, to determine that the debugging device 200 is connected to the user terminal 100.

In an implementation, when the second interface 230 of the debugging device 200 is connected to the first interface 180 of the user terminal 100, the first CC controller 140 is connected to the resistor module 222. When the first CC controller 140 detects that potentials of a pin CC 1 and a pin CC 2 each are switched from a high potential to a low potential, the first CC controller 140 enters a debug accessory mode (debug accessory mode), and determines that the debugging device 200 is connected to the user terminal 100.

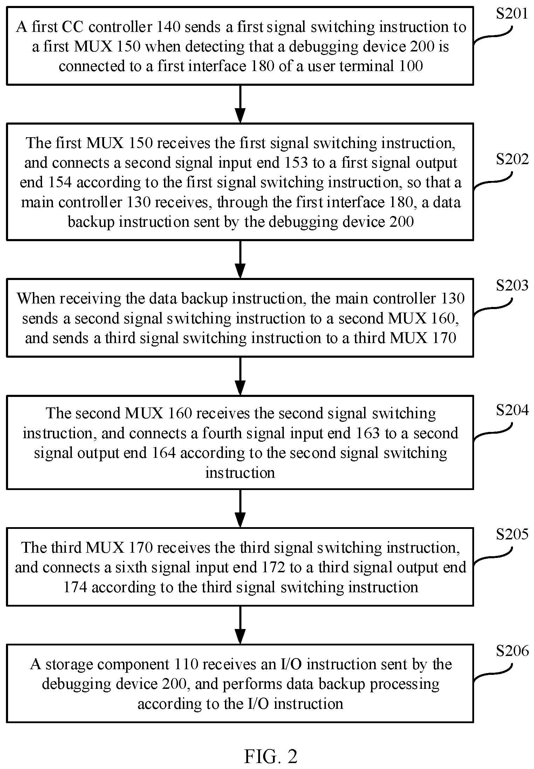

Based on a same technical concept, an embodiment of this application further provides a data backup method. The method is applied to the user terminal 100. As shown in FIG. 2, the method includes the following steps.

Step 201: The first CC controller 140 sends a first signal switching instruction to the first MUX 150 when detecting that the debugging device 200 is connected to the first interface 180 of the user terminal 100.

In an implementation, when the I/O controller 120 of the user terminal 100 is faulty, a skilled person may connect the debugging device 200 to the first interface 180 of the user terminal 100. In this case, the first CC controller 140 sends the first signal switching instruction to the first MUX 150 when detecting that the debugging device 200 is connected to the first interface 180 of the user terminal 100.

Step 202: The first MUX 150 receives the first signal switching instruction, and connects the second signal input end 153 to the first signal output end 154 according to the first signal switching instruction, so that the main controller 130 receives, through the first interface 180, a data backup instruction sent by the debugging device 200.

In an implementation, after receiving the first signal switching instruction, the first MUX 150 connects the second signal input end 153 to the first signal output end 154, so that the main controller 130 is connected to the debugging device 200 through the first interface 180, and can receive the data backup instruction sent by the debugging device 200.

Step 203: When receiving the data backup instruction, the main controller 130 sends a second signal switching instruction to the second MUX 160, and sends a third signal switching instruction to the third MUX 170.

In an implementation, the skilled person sends the data backup instruction to the main controller 130 by using the debugging device 200. After receiving the data backup instruction, the main controller 130 sends the second signal switching instruction to the second MUX 160, and sends the third signal switching instruction to the third MUX 170.

Optionally, the user terminal 100 further includes the authentication information input component 1110 connected to the main controller 130. When receiving the data backup instruction, the main controller 130 sends an authentication request instruction to the authentication information input component 1110. When receiving the authentication request instruction, the authentication information input component 1110 collects authentication information of a user, and sends an authentication response instruction to the main controller 130, where the authentication response instruction carries the authentication information. When receiving the authentication response instruction, the main controller 130 performs authentication on the user based on the authentication information and prestored user information, and if the authentication succeeds, sends the second signal switching instruction to the second MUX 160, and sends the third signal switching instruction to the third MUX 170.

In an implementation, the main controller 130 may prestore the user information, where the user information may be fingerprint information, a password, or the like. When the main controller 130 receives the data backup instruction, the main controller 130 may send the authentication request instruction to the authentication information input component 1110, to ensure security of the data in the storage component 110. Then, after receiving the authentication request instruction, the authentication information input component 1110 may collect the authentication information of the user, and send the authentication response instruction to the main controller 130, where the authentication response instruction carries the authentication information. Subsequently, after receiving the authentication response instruction, the main controller 130 may parse the authentication response instruction, to learn that the authentication response instruction carries the authentication information. After obtaining the authentication information, the main controller 130 may query whether the authentication information exists in the prestored user information. If the authentication information exists in the prestored user information, it indicates that the authentication succeeds. In this case, the main controller 130 may further send the second signal switching instruction to the second MUX 160, and send the third signal switching instruction to the third MUX 170.

It should be noted that the user terminal 100 may further include a display connected to the main controller 130. When the main controller 130 receives the data backup instruction, the main controller 130 may further prompt, through the display, the user to enter the authentication information.

In addition, the display may be further disposed in the debugging device 200. When the main controller 130 receives the data backup instruction, the main controller 130 may send a display instruction to the debugging device 200, so that the display prompts the user to enter the authentication information.

Step 204: The second MUX 160 receives the second signal switching instruction, and connects the fourth signal input end 163 to the second signal output end 164 according to the second signal switching instruction.

In an implementation, after receiving the second signal switching instruction, the second MUX 160 connects the fourth signal input end 163 to the second signal output end 164.

Step 205: The third MUX 170 receives the third signal switching instruction, and connects the sixth signal input end 172 to the third signal output end 174 according to the third signal switching instruction.

In an implementation, after receiving the third signal switching instruction, the third MUX 170 connects the sixth signal input end 172 to the third signal output end 174.

Step 206: The storage component 110 receives an I/O instruction sent by the debugging device 200, and performs data backup processing according to the I/O instruction.

In an implementation, the skilled person may directly send the I/O instruction to the storage component 110 by using the debugging device 200, to back up data in the storage component 110 to the backup device 300 connected to the debugging device 200.

Optionally, when the storage component is a storage component of a bus and interface standard PCIe type, the user terminal further includes the clock selector 190 and the fourth MUX 1100. Correspondingly, the main controller 130 further needs to ensure clock synchronization between the storage component 110 and the debugging device 200. A specific processing process is as follows:
Step 1: When receiving the data backup instruction, the main controller 130 sends a fourth signal switching instruction to the clock selector 190, and sends a fifth signal switching instruction to the fourth MUX 1100.
   In an implementation, after receiving the data backup instruction, the main controller 130 sends the fourth signal switching instruction to the clock selector 190, and sends the fifth signal switching instruction to the fourth MUX 1100.
Step 2: The clock selector 190 receives the fourth signal switching instruction, and connects the eighth signal input end 193 to the fourth signal output end 194 according to the fourth signal switching instruction.
   In an implementation, after receiving the fourth signal switching instruction, the clock selector 190 connects the eighth signal input end 193 to the fourth signal output end 194.
Step 3: The fourth MUX 1100 receives the fifth signal switching instruction, and connects the tenth signal input end 1102 to the fifth signal output end 1104 according to the fifth signal switching instruction.
   In an implementation, after receiving the fifth signal switching instruction, the fourth MUX 1100 connects the tenth signal input end 1102 to the fifth signal output end 1104.
Step 4: The storage component 110 receives a clock signal sent by the debugging device 200, to implement clock synchronization between the storage component 110 and the debugging device 200.

In an implementation, the debugging device 200 may directly send the clock signal to the storage component 110, to ensure clock synchronization between the storage component 110 and the debugging device 200.

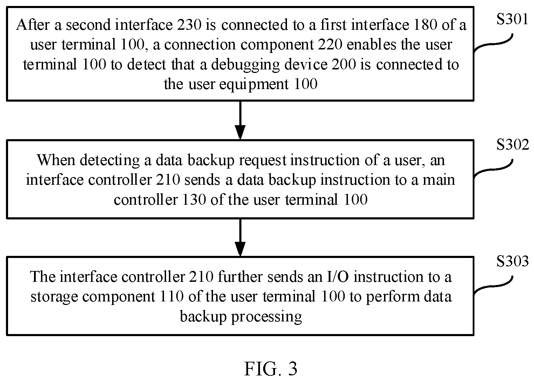

Based on a same technical concept, an embodiment of this application further provides a data backup method. The method is applied to the debugging device 200. As shown in FIG. 3, the method includes the following steps.

Step 301: After the second interface 230 is connected to the first interface 180 of the user terminal 100, the connection component 220 enables the user terminal 100 to detect that the debugging device 200 is connected to the user terminal 100.

In an implementation, when the I/O controller 120 of the user terminal 100 is faulty, a skilled person may connect the second interface 230 of the debugging device 200 to the first interface 180 of the user terminal 100. The first CC controller 140 detects, by using the connection component 220 of the debugging device 200, that the debugging device 200 is connected to the user terminal 100.

Optionally, the first CC controller 140 may detect, by using the connection component 220 of the debugging device 200 in various manners, that the debugging device 200 is connected to the user terminal 100. This embodiment of this application provides two feasible implementations. Details are as follows:
Implementation 1: The connection component 220 includes the second CC controller 221. After the debugging device 200 is connected to the first interface 180 of the user terminal 100 through the second interface 230, the second CC controller 221 sends a connection instruction to the first CC controller 140 of the user terminal 100 through the second interface 230, so that after receiving the connection instruction, the first CC controller 140 determines that the debugging device 200 is connected to the user terminal 100.

In an implementation, when the second interface 230 of the debugging device 200 is connected to the first interface 180 of the user terminal 100, the second CC controller 221 is connected to the first CC controller 140. The second CC controller 221 sends the connection instruction to the first CC controller 140. After receiving the connection instruction, the first CC controller 140 determines that the debugging device 200 is connected to the user terminal 100, where the connection instruction may be a VDM or a UVDM.

Optionally, the second CC controller 221 may prestore a first key. When the second interface 230 of the debugging device 200 is connected to the first interface 180 of the user terminal 100, the second CC controller 221 may send an encrypted connection instruction to the first CC controller 140. The encrypted connection instruction is obtained after the second CC controller 221 encrypts the connection instruction based on the prestored first key. Correspondingly, the first CC controller 140 may prestore a second key corresponding to the first key. When receiving the encrypted connection instruction, the first CC controller 140 may decrypt the encrypted connection instruction based on the prestored second key. If the decryption succeeds, the first CC controller 140 determines that authentication on the debugging device 200 succeeds. If the decryption fails, the first CC controller 140 determines that authentication on the debugging device 200 fails.

Implementation 2: The connection component 220 includes the resistor module 222. After the debugging device 200 is connected to the first interface 180 of the user terminal 100 through the second interface 230, the resistor module 222 enables the first CC controller 140 of the user terminal 100 to switch from a high potential to a low potential, to determine that the debugging device 200 is connected to the user terminal 100.

In an implementation, when the second interface 230 of the debugging device 200 is connected to the first interface 180 of the user terminal 100, the first CC controller 140 is connected to the resistor module 222. When the first CC controller 140 detects that potentials of a pin CC 1 and a pin CC 2 each are switched from a high potential to a low potential, the first CC controller 140 enters a debug accessory mode (debug accessory mode), and determines that the debugging device 200 is connected to the user terminal 100.

Step 302: When detecting a data backup request instruction of a user, the interface controller 210 sends a data backup instruction to the main controller 130 of the user terminal 100.

In an implementation, when detecting the data backup request instruction of the user, the interface controller 210 sends the data backup instruction to the main controller 130. After receiving the data backup instruction, the main controller 130 sends a second signal switching instruction to the second MUX 160, and sends a third signal switching instruction to the third MUX 170. After receiving the second signal switching instruction, the second MUX 160 connects the fourth signal input end 163 to the second signal output end 164. Similarly, after receiving the third signal switching instruction, the third MUX 170 connects the sixth signal input end 172 to the third signal output end 174.

It should be noted that a data backup request button may be further disposed in the debugging device 200. The interface controller 210 may monitor a level status of the data backup request button through a GPIO. When detecting, through the GPIO, that a level of the data backup request button is a high level, the interface controller 210 determines that the user initiates a data backup request. The interface controller 210 may further monitor level statuses of a plurality of data backup request buttons through a plurality of GPIOs. When detecting, through a GPIO, that a level of a specific data backup request button is a high level, the interface controller 210 determines that the user initiates a data backup request.

Step 303: The interface controller 210 further sends an I/O instruction to the storage component 110 of the user terminal 100 to perform data backup processing.

In an implementation, the skilled person may directly send the I/O instruction to the storage component 110 by using the interface controller 210 of the debugging device 200, to back up data in the storage component 110 to the backup device 300 connected to the debugging device 200.

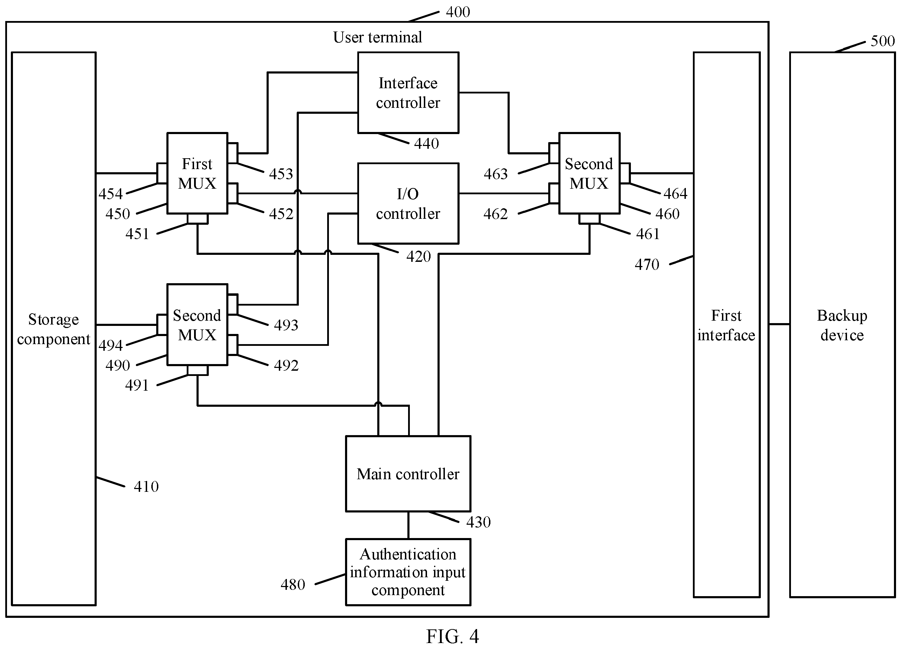

FIG. 4 is a schematic structural diagram of a user terminal according to an embodiment of this application. As shown in FIG. 4, the user terminal 400 includes a storage component 410, an I/O controller 420, a main controller 430, an interface controller 440, a first MUX 450, a second MUX 460, and a first interface 470. The storage component 410 may be a storage component of a PCIe type, may be a storage component of an SATA type, or may be a storage component of another type. This is not limited in this embodiment of this application. The first interface 470 may be a type-C first interface, or may be a first interface of another type. This is not limited in this embodiment of this application. The following describes in detail connection relationships between and functions of the storage component 410, the I/O controller 420, the main controller 430, the interface controller 440, the first MUX 450, the second MUX 460, and the first interface 470 that are of the user terminal 400. Details are as follows:
The main controller 430 is connected to each of a first signal selection input end 451 of the first MUX 450 and a second signal selection input end 461 of the second MUX 460, and is configured to: when receiving a data backup request instruction, send a first signal switching instruction to the first MUX 450, and send a second signal switching instruction to the second MUX 460.

A first signal input end 452 of the first MUX 450 is connected to the I/O controller 420, a second signal input end 453 of the first MUX 450 is connected to the interface controller 440, and a first signal output end 454 of the first MUX 450 is connected to the storage component 410; and the first MUX 450 is configured to connect the second signal input end 453 to the first signal output end 454 when receiving the first signal switching instruction.

A third signal input end 462 of the second MUX 460 is connected to the I/O controller 420, a fourth signal input end 463 of the second MUX 460 is connected to the interface controller 440, and a second signal output end 464 of the second MUX 460 is connected to the first interface 470; and the second MUX 460 is configured to connect the fourth signal input end 463 to the second signal output end 464 when receiving the second signal switching instruction.

The interface controller 440 is configured to: when the second signal input end 453 of the first MUX 450 is connected to the first signal output end 454 of the first MUX 450, and the fourth signal input end 463 of the second MUX 460 is connected to the second signal output end 464 of the second MUX 460, send an I/O instruction to the storage component 110 to perform data backup processing.

In an implementation, when the I/O controller 420 of the user terminal 400 works normally, the first signal input end 452 of the first MUX 450 is connected to the first signal output end 454 of the first MUX 450, and the third signal input end 462 of the second MUX 460 is connected to the second signal output end 464 of the second MUX 460. In this case, a skilled person may directly connect a backup device 500 to the first interface 470 of the user terminal 400, and send the I/O instruction to the storage component 410 by using the I/O controller 420, to back up data in the storage component 410 to the backup device 500.

However, when the I/O controller 420 of the user terminal 400 is faulty, a skilled person may send a data backup request instruction to the main controller 430 after connecting the backup device 500 to the first interface 470 of the user terminal 400. After receiving the data backup request instruction, the main controller 430 may send the first signal switching instruction to the first MUX 450, and send the second signal switching instruction to the second MUX 460. After receiving the first signal switching instruction, the first MUX 450 connects the second signal input end 453 to the first signal output end 454. Similarly, after receiving the second signal switching instruction, the second MUX 460 connects the fourth signal input end 463 to the second signal output end 464. In this way, when the I/O controller 420 of the user terminal 400 is faulty, the skilled person may directly send the I/O instruction to the storage component 410 by using the interface controller 440 of the user terminal 400, to back up data in the storage component 410 to the backup device 500. Optionally, the user terminal 400 further includes an authentication information input component 480 connected to the main controller 430.

The main controller 430 is further configured to: when receiving the data backup instruction, send an authentication request instruction to the authentication information input component 480.

The authentication information input component 480 is configured to: when receiving the authentication request instruction, collect authentication information of a user, and send an authentication response instruction to the main controller 430, where the authentication response instruction carries the authentication information.

The main controller 430 is further configured to: when receiving the authentication response instruction, perform authentication on the user based on the authentication information and prestored user information, and if the authentication succeeds, send the first signal switching instruction to the first MUX 450, and send the second signal switching instruction to the second MUX 460.

In an implementation, the main controller 430 may prestore the user information, where the user information may be fingerprint information, a password, or the like. When the main controller 430 receives the data backup instruction, the main controller 430 may send the authentication request instruction to the authentication information input component 480, to ensure security of the data in the storage component 410. Then, after receiving the authentication request instruction, the authentication information input component 480 may collect the authentication information of the user, and send the authentication response instruction to the main controller 430, where the authentication response instruction carries the authentication information. Subsequently, after receiving the authentication response instruction, the main controller 430 may parse the authentication response instruction, to learn that the authentication response instruction carries the authentication information. After obtaining the authentication information, the main controller 430 may query whether the authentication information exists in the prestored user information. If the authentication information exists in the prestored user information, it indicates that the authentication succeeds. In this case, the main controller 430 may further send the first signal switching instruction to the first MUX 450, and send the second signal switching instruction to the second MUX 460.

It should be noted that the user terminal 400 may further include a display connected to the main controller 430. When the main controller 430 receives the data backup instruction, the main controller 430 may further prompt, through the display, the user to enter the authentication information.

Optionally, when the storage component 410 is a storage component of a PCIe type, the user terminal 400 further includes a clock selector 490.

The main controller 430 is connected to a third signal selection input end 491 of the clock selector 490, and is configured to send a third signal switching instruction to the clock selector 490 when receiving the data backup instruction.

A fifth signal input end 492 of the clock selector 490 is connected to the I/O controller 420, a sixth signal input end 493 of the clock selector 490 is connected to the interface controller 440, and a third signal output end 494 of the clock selector 490 is connected to the storage component 410; and the clock selector 490 is configured to connect the sixth signal input end 493 to the third signal output end 494 when receiving the third signal switching instruction.

The storage component 410 is further configured to: when the sixth signal input end 493 of the clock selector 490 is connected to the third signal output end 494 of the clock selector 490, receive a clock signal sent by the interface controller 440, to implement clock synchronization between the storage component 410 and the interface controller 440.

In an implementation, when the I/O controller 420 of the user terminal 400 works normally, the fifth signal input end 492 of the clock selector 490 is connected to the third signal output end 494 of the clock selector 490. In this case, the I/O controller 420 may send clock information to the storage component 410, to ensure clock synchronization between the storage component 410 and the I/O controller 420.

However, when the I/O controller 420 of the user terminal 400 is faulty, a skilled person may send a data backup request instruction to the main controller 430 after connecting the backup device 500 to the first interface 470 of the user terminal 400. The main controller 430 sends the third signal switching instruction to the clock selector 490 after receiving the data backup request instruction. After receiving the third signal switching instruction, the clock selector 490 connects the sixth signal input end 493 to the third signal output end 494. In this way, the interface controller 440 may directly send the clock signal to the storage component 410, to ensure clock synchronization between the storage component 410 and the interface controller 440.

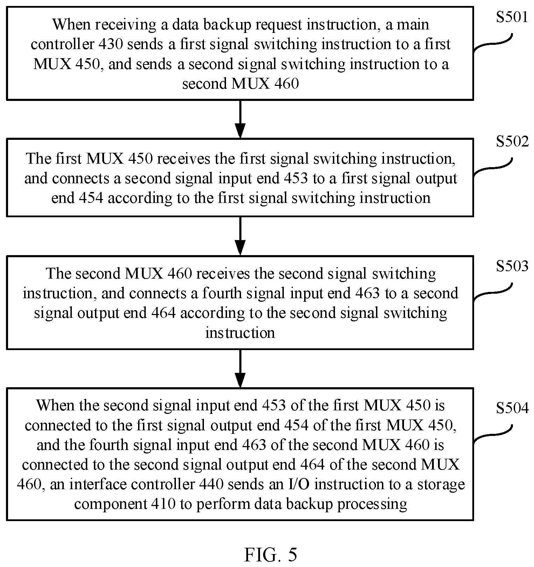

Based on a same technical concept, an embodiment of this application further provides a data backup method. The method is applied to the user terminal 400. As shown in FIG. 5, the method includes the following steps.

Step 501: When receiving a data backup request instruction, the main controller 430 sends a first signal switching instruction to the first MUX 450, and sends a second signal switching instruction to the second MUX 460.

In an implementation, when the I/O controller 420 of the user terminal 400 is faulty, a skilled person may send the data backup request instruction to the main controller 430 after connecting the backup device 500 to the first interface 470 of the user terminal 400. After receiving the data backup request instruction, the main controller 430 may send the first signal switching instruction to the first MUX 450, and send the second signal switching instruction to the second MUX 460.

Optionally, the user terminal 400 further includes the authentication information input component 480 connected to the main controller 430. When receiving the data backup instruction, the main controller 430 sends an authentication request instruction to the authentication information input component 480. When receiving the authentication request instruction, the authentication information input component 480 collects authentication information of a user, and sends an authentication response instruction to the main controller 430, where the authentication response instruction carries the authentication information. When receiving the authentication response instruction, the main controller 430 performs authentication on the user based on the authentication information and prestored user information, and if the authentication succeeds, sends the first signal switching instruction to the first MUX 450, and sends the second signal switching instruction to the second MUX 460.

In an implementation, the main controller 430 may prestore the user information, where the user information may be fingerprint information, a password, or the like. When the main controller 430 receives the data backup instruction, the main controller 430 may send the authentication request instruction to the authentication information input component 480, to ensure security of the data in the storage component 410. Then, after receiving the authentication request instruction, the authentication information input component 480 may collect the authentication information of the user, and send the authentication response instruction to the main controller 430, where the authentication response instruction carries the authentication information. Subsequently, after receiving the authentication response instruction, the main controller 430 may parse the authentication response instruction, to learn that the authentication response instruction carries the authentication information. After obtaining the authentication information, the main controller 430 may query whether the authentication information exists in the prestored user information. If the authentication information exists in the prestored user information, it indicates that the authentication succeeds. In this case, the main controller 430 may further send the first signal switching instruction to the first MUX 450, and send the second signal switching instruction to the second MUX 460.

It should be noted that the user terminal 400 may further include a display connected to the main controller 430. When the main controller 430 receives the data backup instruction, the main controller 430 may further prompt, through the display, the user to enter the authentication information.

Step 502: The first MUX 450 receives the first signal switching instruction, and connects the second signal input end 453 to the first signal output end 454 according to the first signal switching instruction.

In an implementation, after receiving the first signal switching instruction, the first MUX 450 connects the second signal input end 453 to the first signal output end 454.

Step 503: The second MUX 460 receives the second signal switching instruction, and connects the fourth signal input end 463 to the second signal output end 464 according to the second signal switching instruction.

In an implementation, after receiving the second signal switching instruction, the second MUX 460 connects the fourth signal input end 463 to the second signal output end 464.

Step 504: When the second signal input end 453 of the first MUX 450 is connected to the first signal output end 454 of the first MUX 450, and the fourth signal input end 463 of the second MUX 460 is connected to the second signal output end 464 of the second MUX 460, the interface controller 440 sends an I/O instruction to the storage component 410 to perform data backup processing.

In an implementation, after the second signal input end 453 of the first MUX 450 is connected to the first signal output end 454 of the first MUX 450, and the fourth signal input end 463 of the second MUX 460 is connected to the second signal output end 464 of the second MUX 460, the skilled person may directly send the I/O instruction to the storage component 410 by using the interface controller 440 of the user terminal 400, to back up data in the storage component 410 to the backup device 500.

Optionally, when the storage component 410 is a storage component of a PCIe type, the user terminal 400 further includes the clock selector 490. The main controller 430 further needs to ensure clock synchronization between the storage component 410 and the interface controller 440. A specific processing process is as follows:
Step 1: The main controller 430 sends a third signal switching instruction to the clock selector 490 when receiving the data backup instruction.
   In an implementation, when the I/O controller 420 of the user terminal 400 is faulty, a skilled person may send the data backup request instruction to the main controller 430 after connecting the backup device 500 to the first interface 470 of the user terminal 400. The main controller 430 sends the third signal switching instruction to the clock selector 490 after receiving the data backup request instruction.
Step 2: The clock selector 490 receives the third signal switching instruction, and connects the sixth signal input end 493 to the third signal output end 494 according to the third signal switching instruction.
   In an implementation, after receiving the third signal switching instruction, the clock selector 490 connects the sixth signal input end 493 to the third signal output end 494.
Step 3: The storage component 410 receives a clock signal sent by the interface controller 440, to implement clock synchronization between the storage component 410 and the interface controller 440.

In an implementation, the interface controller 440 may directly send the clock signal to the storage component 410, to ensure clock synchronization between the storage component 410 and the interface controller 440.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A user terminal (100), wherein the user terminal (100) comprises a storage component (110), an input/output I/O controller (120), a main controller (130), a first configuration channel CC controller (140), a first multiplexer MUX (150), a second MUX (160), a third MUX (170), and a first interface (180), wherein
the first CC controller (140) is connected to each of the first interface (180) and a first signal selection input end (151) of the first MUX (150), and is configured to send a first signal switching instruction to the first MUX (150) when detecting that a debugging device (200) is connected to the first interface (180) of the user terminal (100);
a first signal input end (152) of the first MUX (150) is connected to the I/O controller (120), a second signal input end (153) of the first MUX (150) is connected to the main controller (130), and a first signal output end (154) of the first MUX (150) is connected to the first interface (180); and the first MUX (150) is configured to connect the second signal input end (153) to the first signal output end (154) when receiving the first signal switching instruction, so that the main controller (130) receives, through the first interface (180), a data backup instruction sent by the debugging device (200);
the main controller (130) is connected to each of a second signal selection input end (161) of the second MUX (160) and a third signal selection input end (171) of the third MUX (170), and is configured to: when receiving the data backup instruction, send a second signal switching instruction to the second MUX (160), and send a third signal switching instruction to the third MUX (170);
a third signal input end (162) of the second MUX (160) is connected to the I/O controller (120), a fourth signal input end (163) of the second MUX (160) is connected to a sixth signal input end (172) of the third MUX (170), and a second signal output end (164) of the second MUX (160) is connected to the storage component (110); and the second MUX (160) is configured to connect the fourth signal input end (163) to the second signal output end (164) when receiving the second signal switching instruction;
a fifth signal input end (173) of the third MUX (170) is connected to the I/O controller (120), and a third signal output end (174) of the third MUX (170) is connected to the first interface (180); and the third MUX (170) is configured to connect the sixth signal input end (172) to the third signal output end (174) when receiving the third signal switching instruction; and
the storage component (110) is configured to: when the fourth signal input end (163) of the second MUX (160) is connected to the second signal output end (164) of the second MUX (160), and the sixth signal input end (172) of the third MUX (170) is connected to the third signal output end (174) of the third MUX (170), receive an I/O instruction sent by the debugging device (200), and perform data backup processing according to the I/O instruction.

2. The user terminal (100) according to claim 1, wherein when the storage component (110) is a storage component (110) of a bus and interface standard PCIe type, the user terminal (100) further comprises a clock selector and a fourth MUX, wherein
the main controller (130) is connected to each of a fourth signal selection input end of the clock selector and a fifth signal selection input end of the fourth MUX, and is configured to: when receiving the data backup instruction, send a fourth signal switching instruction to the clock selector, and send a fifth signal switching instruction to the fourth MUX;
a seventh signal input end of the clock selector is connected to the I/O controller, an eighth signal input end of the clock selector is connected to a tenth signal input end of the fourth MUX, and a fourth signal output end of the clock selector is connected to the storage component (110); and the clock selector is configured to connect the eighth signal input end to the fourth signal output end when receiving the fourth signal switching instruction;
a ninth signal input end of the fourth MUX is connected to the I/O controller, and a fifth signal output end of the fourth MUX is connected to the first interface (180); and the fourth MUX is configured to connect the tenth signal input end to the fifth signal output end when receiving the fifth signal switching instruction; and
the storage component (110) is further configured to: when the eighth signal input end of the clock selector is connected to the fourth signal output end of the clock selector, and the tenth signal input end of the fourth MUX is connected to the fifth signal output end of the fourth MUX, receive a clock signal sent by the debugging device (200), to implement clock synchronization between the storage component (110) and the debugging device.

3. The user terminal (100) according to claim 1, wherein the user terminal (100) further comprises an authentication information input component connected to the main controller (130), wherein
the main controller (130) is further configured to: when receiving the data backup instruction, send an authentication request instruction to the authentication information input component;
the authentication information input component is configured to: when receiving the authentication request instruction, collect authentication information of a user, and send an authentication response instruction to the main controller (130), wherein the authentication response instruction carries the authentication information; and
the main controller (130) is further configured to: when receiving the authentication response instruction, perform authentication on the user based on the authentication information and prestored user information, and if the authentication succeeds, send the second signal switching instruction to the second MUX (160), and send the third signal switching instruction to the third MUX (170).

4. A user terminal (100), wherein the user terminal (100) comprises a storage component (110), an input/output I/O controller (120), a main controller (130), an interface controller, a first multiplexer MUX (150), a second MUX (160), and a first interface (180), wherein
the main controller (130) is connected to each of a first signal selection input end of the first MUX (150)and a second signal selection input end of the second MUX (160), and is configured to: when receiving a data backup request instruction of a user, send a first signal switching instruction to the first MUX (150), and send a second signal switching instruction to the second MUX (160);
a first signal input end of the first MUX (150) is connected to the I/O controller (120), a second signal input end of the first MUX (150) is connected to the interface controller, and a first signal output end of the first MUX (150) is connected to the storage component (110); and the first MUX (150) is configured to connect the second signal input end to the first signal output end when receiving the first signal switching instruction;
a third signal input end of the second MUX (160) is connected to the I/O controller (120), a fourth signal input end of the second MUX (160) is connected to the interface controller, and a second signal output end of the second MUX (160) is connected to the first interface (180); and the second MUX (160) is configured to connect the fourth signal input end to the second signal output end when receiving the second signal switching instruction; and
the interface controller is configured to: when the second signal input end of the first MUX (150) is connected to the first signal output end of the first MUX (150), and the fourth signal input end of the second MUX (160) is connected to the second signal output end of the second MUX (160), send an I/O instruction to the storage component (110) to perform data backup processing.

5. The user terminal (100) according to claim 4, wherein when the storage component (110) is a storage component (110) of a bus and interface standard PCIe type, the user terminal (100) further comprises a clock selector, wherein
the main controller (130) is connected to a third signal selection input end of the clock selector, and is configured to send a third signal switching instruction to the clock selector when receiving a data backup instruction;
a fifth signal input end of the clock selector is connected to the I/O controller (120), a sixth signal input end of the clock selector is connected to the interface controller, and a third signal output end of the clock selector is connected to the storage component (110); and the clock selector is configured to connect the sixth signal input end to the third signal output end when receiving the third signal switching instruction; and
the storage component (110) is further configured to: when the sixth signal input end of the clock selector is connected to the third signal output end of the clock selector, receive a clock signal sent by the interface controller, to implement clock synchronization between the storage component (110) and the interface controller.

6. The user terminal (100) according to claim 4, wherein the user terminal (100) further comprises an authentication information input component connected to the main controller (130), wherein
the main controller (130) is further configured to: when receiving a data backup instruction, send an authentication request instruction to the authentication information input component;
the authentication information input component is configured to: when receiving the authentication request instruction, collect authentication information of a user, and send an authentication response instruction to the main controller (130), wherein the authentication response instruction carries the authentication information; and
the main controller (130) is further configured to: when receiving the authentication response instruction, perform authentication on the user based on the authentication information and prestored user information, and if the authentication succeeds, send the first signal switching instruction to the first MUX (150), and send the second signal switching instruction to the second MUX (160).

7. A data backup method, wherein the method is applied to the user terminal (100) according to any one of claims 1 to 3, and the method comprises:
sending, by a first configuration channel CC controller (140), a first signal switching instruction to a first multiplexer MUX (150) when detecting that a debugging device (200) is connected to a first interface (180) of the user terminal (100);
receiving, by the first MUX (150), the first signal switching instruction, and connecting a second signal input end to a first signal output end according to the first signal switching instruction, so that a main controller (130) receives, through the first interface (180), a data backup instruction sent by the debugging device (200);
when receiving the data backup instruction, sending, by the main controller (130), a second signal switching instruction to a second MUX (160), and sending a third signal switching instruction to a third MUX (170);
receiving, by the second MUX (160), the second signal switching instruction, and connecting a fourth signal input end to a second signal output end according to the second signal switching instruction;
receiving, by the third MUX (170), the third signal switching instruction, and connecting a sixth signal input end to a third signal output end according to the third signal switching instruction; and
receiving, by a storage component (110), an input/output I/O instruction sent by the debugging device (200), and performing data backup processing according to the I/O instruction.

8. The method according to claim 7, wherein when the storage component (110) is a storage component (110) of a bus and interface standard PCIe type, the user terminal (100) further comprises a clock selector and a fourth MUX; and the method further comprises:
when receiving the data backup instruction, sending, by the main controller (130), a fourth signal switching instruction to the clock selector, and sending a fifth signal switching instruction to the fourth MUX;
receiving, by the clock selector, the fourth signal switching instruction, and connecting an eighth signal input end to a fourth signal output end according to the fourth signal switching instruction;
receiving, by the fourth MUX, the fifth signal switching instruction, and connecting a tenth signal input end to a fifth signal output end according to the fifth signal switching instruction; and
receiving, by the storage component (110), a clock signal sent by the debugging device (200), to implement clock synchronization between the storage component (110) and the debugging device (200).

9. The method according to claim 7, wherein the user terminal (100) further comprises an authentication information input component connected to the main controller (130); and the method further comprises:
when receiving the data backup instruction, sending, by the main controller (130), an authentication request instruction to the authentication information input component;
when receiving the authentication request instruction, collecting, by the authentication information input component, authentication information of a user, and sending an authentication response instruction to the main controller (130), wherein the authentication response instruction carries the authentication information; and
when receiving the authentication response instruction, performing, by the main controller (130), authentication on the user based on the authentication information and prestored user information, and if the authentication succeeds, sending the second signal switching instruction to the second MUX (160), and sending the third signal switching instruction to the third MUX (170).

10. A data backup method, wherein the method is applied to the user terminal (100) according to any one of claims 4 to 6, and the method comprises:
when detecting a data backup request instruction of a user, sending, by a main controller (130), a first signal switching instruction to a first multiplexer MUX (150), and sending a second signal switching instruction to a second MUX (160);
receiving, by the first MUX (150), the first signal switching instruction, and connecting a second signal input end to a first signal output end according to the first signal switching instruction;
receiving, by the second MUX (160), the second signal switching instruction, and connecting a fourth signal input end to a second signal output end according to the second signal switching instruction; and
when the second signal input end of the first MUX (150) is connected to the first signal output end of the first MUX (150), and the fourth signal input end of the second MUX (160) is connected to the second signal output end of the second MUX (160), sending, by an interface controller, an input/output I/O instruction to a storage component (110) to perform data backup processing.

11. The method according to claim 10, wherein when the storage component (110) is a storage component (110) of a bus and interface standard PCIe type, the user terminal (100) further comprises a clock selector; and the method further comprises:
sending, by the main controller (130), a third signal switching instruction to the clock selector when receiving a data backup instruction;
receiving, by the clock selector, the third signal switching instruction, and connecting a sixth signal input end to a third signal output end according to the third signal switching instruction; and
receiving, by the storage component (110), a clock signal sent by the interface controller, to implement clock synchronization between the storage component (110) and the interface controller.

12. The method according to claim 10, wherein the user terminal (100) further comprises an authentication information input component connected to the main controller (130); and the method further comprises:
when receiving a data backup instruction, sending, by the main controller (130), an authentication request instruction to the authentication information input component;
when receiving the authentication request instruction, collecting, by the authentication information input component, authentication information of a user, and sending an authentication response instruction to the main controller (130), wherein the authentication response instruction carries the authentication information; and
when receiving the authentication response instruction, performing, by the main controller (130), authentication on the user based on the authentication information and prestored user information, and if the authentication succeeds, sending the first signal switching instruction to the first MUX (150), and sending the second signal switching instruction to the second MUX (160).

## Patentansprüche

1. Benutzerendgerät (100), wobei das Benutzerendgerät (100) eine Speicherkomponente (110), eine Eingabe/Ausgabe-Steuereinheit, E/A-Steuereinheit (120), eine Hauptsteuereinheit (130), eine erste Konfigurationskanalsteuereinheit, CC-Steuereinheit (140), einen ersten Multiplexer, MUX (150), einen zweiten MUX (160), einen dritten MUX (170) und eine erste Schnittstelle (180) umfasst, wobei:
die erste CC-Steuereinheit (140) sowohl mit der ersten Schnittstelle (180) als auch mit einem ersten Signalauswahleingangsende (151) des ersten MUX (150) verbunden ist und konfiguriert ist zum Senden einer ersten Signalschaltanweisung an den ersten MUX (150), wenn erkannt wird, dass eine Debugging-Vorrichtung (200) mit der ersten Schnittstelle (180) des Benutzerendgeräts (100) verbunden ist;
ein erstes Signaleingangsende (152) des ersten MUX (150) mit der E/A-Steuereinheit (120) verbunden ist, ein zweites Signaleingangsende (153) des ersten MUX (150) mit der Hauptsteuereinheit (130) verbunden ist und ein erstes Signalausgangsende (154) des ersten MUX (150) mit der ersten Schnittstelle (180) verbunden ist; und wobei der erste MUX (150) konfiguriert ist, um das zweite Signaleingangsende (153) mit dem ersten Signalausgangsende (154) zu verbinden, wenn die erste Signalschaltanweisung empfangen wird, sodass die Hauptsteuereinheit (130) über die erste Schnittstelle (180) eine Datensicherungsanweisung empfängt, die von der Debugging-Vorrichtung (200) gesendet wird;
die Hauptsteuereinheit (130) sowohl mit einem zweiten Signalauswahleingangsende (161) des zweiten MUX (160) als auch mit einem dritten Signalauswahleingangsende (171) des dritten MUX (170) verbunden ist und konfiguriert ist zum: wenn die Datensicherungsanweisung empfangen wird, Senden einer zweiten Signalschaltanweisung an den zweiten MUX (160) und Senden einer dritten Signalschaltanweisung an den dritten MUX (170);
ein drittes Signaleingangsende (162) des zweiten MUX (160) mit der E/A-Steuereinheit (120) verbunden ist, ein viertes Signaleingangsende (163) des zweiten MUX (160) mit einem sechsten Signaleingangsende (172) des dritten MUX (170) verbunden ist und ein zweites Signalausgangsende (164) des zweiten MUX (160) mit der Speicherkomponente (110) verbunden ist; und wobei der zweite MUX (160) konfiguriert ist, um das vierte Signaleingangsende (163) mit dem zweiten Signalausgangsende (164) zu verbinden, wenn die zweite Signalschaltanweisung empfangen wird;
ein fünftes Signaleingangsende (173) des dritten MUX (170) mit der E/A-Steuereinheit (120) verbunden ist und ein drittes Signalausgangsende (174) des dritten MUX (170) mit der ersten Schnittstelle (180) verbunden ist; und wobei der dritte MUX (170) konfiguriert ist, um das sechste Signaleingangsende (172) mit dem dritten Signalausgangsende (174) zu verbinden, wenn die dritte Signalschaltanweisung empfangen wird; und
die Speicherkomponente (110) konfiguriert ist zum: wenn das vierte Signaleingangsende (163) des zweiten MUX (160) mit dem zweiten Signalausgangsende (164) des zweiten MUX (160) verbunden ist und das sechste Signaleingangsende (172) des dritten MUX (170) mit dem dritten Signalausgangsende (174) des dritten MUX (170) verbunden ist, Empfangen einer E/A-Anweisung, die von der Debugging-Vorrichtung (200) gesendet wird, und Durchführen einer Datensicherungsverarbeitung gemäß der E/A-Anweisung.

2. Benutzerendgerät (100) nach Anspruch 1, wobei, wenn die Speicherkomponente (110) eine Speicherkomponente (110) eines Busses und einer Schnittstelle eines Standard-PCIe-Typs ist, das Benutzerendgerät (100) ferner einen Taktwähler und einen vierten MUX umfasst, wobei:
die Hauptsteuereinheit (130) sowohl mit einem vierten Signalauswahleingangsende des Taktwählers als auch mit einem fünften Signalauswahleingangsende des vierten MUX verbunden ist und konfiguriert ist zum: wenn die Datensicherungsanweisung empfangen wird, Senden einer vierten Signalschaltanweisung an den Taktwähler und Senden einer fünften Signalschaltanweisung an den vierten MUX;
ein siebtes Signaleingangsende des Taktwählers mit der E/A-Steuereinheit verbunden ist, ein achtes Signaleingangsende des Taktwählers mit einem zehnten Signaleingangsende des vierten MUX verbunden ist und ein viertes Signalausgangsende des Taktwählers mit der Speicherkomponente (110) verbunden ist; und wobei der Taktwähler konfiguriert ist, um das achte Signaleingangsende mit dem vierten Signalausgangsende zu verbinden, wenn die vierte Signalschaltanweisung empfangen wird;
ein neuntes Signaleingangsende des vierten MUX mit der E/A-Steuereinheit verbunden ist und ein fünftes Signalausgangsende des vierten MUX mit der ersten Schnittstelle (180) verbunden ist; und wobei der vierte MUX konfiguriert ist, um das zehnte Signaleingangsende mit dem fünften Signalausgangsende zu verbinden, wenn die fünfte Signalschaltanweisung empfangen wird; und
die Speicherkomponente (110) ferner konfiguriert ist zum: wenn das achte Signaleingangsende des Taktwählers mit dem vierten Signalausgangsende des Taktwählers verbunden ist und das zehnte Signaleingangsende des vierten MUX mit dem fünften Signalausgangsende des vierten MUX verbunden ist, Empfangen eines Taktsignals, das von der Debugging-Vorrichtung (200) gesendet wird, um eine Taktsynchronisation zwischen der Speicherkomponente (110) und der Debugging-Vorrichtung zu implementieren.

3. Benutzerendgerät (100) nach Anspruch 1, wobei das Benutzerendgerät (100) ferner eine Eingangskomponente für Authentifizierungsinformationen umfasst, die mit der Hauptsteuereinheit (130) verbunden ist, wobei:
die Hauptsteuereinheit (130) ferner konfiguriert ist zum: wenn die Datensicherungsanweisung empfangen wird, Senden einer Authentifizierungsanforderungsanweisung an die Eingangskomponente für Authentifizierungsinformationen;
die Eingangskomponente für Authentifizierungsinformationen konfiguriert ist zum: wenn die Authentifizierungsanforderungsanweisung empfangen wird, Sammeln von Authentifizierungsinformationen eines Benutzers und Senden einer Authentifizierungsantwortanweisung an die Hauptsteuereinheit (130), wobei die Authentifizierungsantwortanweisung die Authentifizierungsinformationen mitführt; und
die Hauptsteuereinheit (130) ferner konfiguriert ist zum: wenn die Authentifizierungsantwortanweisung empfangen wird, Durchführen einer Authentifizierung des Benutzers basierend auf den Authentifizierungsinformationen und auf vorab gespeicherten Benutzerinformationen, und wenn die Authentifizierung erfolgreich ist, Senden der zweiten Signalschaltanweisung an den zweiten MUX (160) und Senden der dritten Signalschaltanweisung an den dritten MUX (170).

4. Benutzerendgerät (100), wobei das Benutzerendgerät (100) eine Speicherkomponente (110), eine Eingabe/Ausgabe-Steuereinheit, E/A-Steuereinheit (120), eine Hauptsteuereinheit (130), eine Schnittstellensteuereinheit, einen ersten Multiplexer, MUX (150), einen zweiten MUX (160) und eine erste Schnittstelle (180) umfasst, wobei:
die Hauptsteuereinheit (130) sowohl mit einem ersten Signalauswahleingangsende des ersten MUX (150) als auch mit einem zweiten Signalauswahleingangsende des zweiten MUX (160) verbunden ist und konfiguriert ist zum: wenn eine Datensicherungsanforderungsanweisung eines Benutzers empfangen wird, Senden einer ersten Signalschaltanweisung an den ersten MUX (150) und Senden einer zweiten Signalschaltanweisung an den zweiten MUX (160);
ein erstes Signaleingangsende des ersten MUX (150) mit der E/A-Steuereinheit (120) verbunden ist, ein zweites Signaleingangsende des ersten MUX (150) mit der Schnittstellensteuereinheit verbunden ist und ein erstes Signalausgangsende des ersten MUX (150) mit der Speicherkomponente (110) verbunden ist; und wobei der erste MUX (150) konfiguriert ist, um das zweite Signaleingangsende mit dem ersten Signalausgangsende zu verbinden, wenn die erste Signalschaltanweisung empfangen wird;
ein drittes Signaleingangsende des zweiten MUX (160) mit der E/A-Steuereinheit (120) verbunden ist, ein viertes Signaleingangsende des zweiten MUX (160) mit der Schnittstellensteuereinheit verbunden ist und ein zweites Signalausgangsende des zweiten MUX (160) mit der ersten Schnittstelle (180) verbunden ist; und wobei der zweite MUX (160) konfiguriert ist, um das vierte Signaleingangsende mit dem zweiten Signalausgangsende zu verbinden, wenn die zweite Signalschaltanweisung empfangen wird; und
die Schnittstellensteuereinheit konfiguriert ist zum: wenn das zweite Signaleingangsende des ersten MUX (150) mit dem ersten Signalausgangsende des ersten MUX (150) verbunden ist und das vierte Signaleingangsende des zweiten MUX (160) mit dem zweiten Signalausgangsende des zweiten MUX (160) verbunden ist, Senden einer E/A-Anweisung an die Speicherkomponente (110), um eine Datensicherungsverarbeitung durchzuführen.

5. Benutzerendgerät (100) nach Anspruch 4, wobei, wenn die Speicherkomponente (110) eine Speicherkomponente (110) eines Busses und einer Schnittstelle eines Standard-PCIe-Typs ist, das Benutzerendgerät (100) ferner einen Taktwähler umfasst, wobei:
die Hauptsteuereinheit (130) mit einem dritten Signalauswahleingangsende des Taktwählers verbunden ist und konfiguriert ist zum Senden einer dritten Signalschaltanweisung an den Taktwähler, wenn eine Datensicherungsanweisung empfangen wird;
ein fünftes Signaleingangsende des Taktwählers mit der E/A-Steuereinheit (120) verbunden ist, ein sechstes Signaleingangsende des Taktwählers mit der Schnittstellensteuereinheit verbunden ist und ein drittes Signalausgangsende des Taktwählers mit der Speicherkomponente (110) verbunden ist; und wobei der Taktwähler konfiguriert ist, um das sechste Signaleingangsende mit dem dritten Signalausgangsende zu verbinden, wenn die dritte Signalschaltanweisung empfangen wird; und
die Speicherkomponente (110) ferner konfiguriert ist zum: wenn das sechste Signaleingangsende des Taktwählers mit dem dritten Signalausgangsende des Taktwählers verbunden ist, Empfangen eines Taktsignals, das von der Schnittstellensteuereinheit gesendet wird, um eine Taktsynchronisation zwischen der Speicherkomponente (110) und der Schnittstellensteuereinheit zu implementieren.

6. Benutzerendgerät (100) nach Anspruch 4, wobei das Benutzerendgerät (100) ferner eine Eingangskomponente für Authentifizierungsinformationen umfasst, die mit der Hauptsteuereinheit (130) verbunden ist, wobei:
die Hauptsteuereinheit (130) ferner konfiguriert ist zum: wenn eine Datensicherungsanweisung empfangen wird, Senden einer Authentifizierungsanforderungsanweisung an die Eingangskomponente für Authentifizierungsinformationen;
die Eingangskomponente für Authentifizierungsinformationen konfiguriert ist zum: wenn die Authentifizierungsanforderungsanweisung empfangen wird, Sammeln von Authentifizierungsinformationen eines Benutzers und Senden einer Authentifizierungsantwortanweisung an die Hauptsteuereinheit (130), wobei die Authentifizierungsantwortanweisung die Authentifizierungsinformationen mitführt; und
die Hauptsteuereinheit (130) ferner konfiguriert ist zum: wenn die Authentifizierungsantwortanweisung empfangen wird, Durchführen einer Authentifizierung des Benutzers basierend auf den Authentifizierungsinformationen und auf vorab gespeicherten Benutzerinformationen, und wenn die Authentifizierung erfolgreich ist, Senden der ersten Signalschaltanweisung an den ersten MUX (150) und Senden der zweiten Signalschaltanweisung an den zweiten MUX (160).

7. Datensicherungsverfahren, wobei das Verfahren in dem Benutzerendgerät (100) nach einem der Ansprüche 1 bis 3 angewandt wird und wobei das Verfahren umfasst:
Senden einer ersten Signalschaltanweisung von einer ersten Konfigurationskanalsteuereinheit, CC-Steuereinheit (140), an einen ersten Multiplexer, MUX (150), wenn erkannt wird, dass eine Debugging-Vorrichtung (200) mit einer ersten Schnittstelle (180) des Benutzerendgeräts (100) verbunden ist;
Empfangen, in dem ersten MUX (150), der ersten Signalschaltanweisung und Verbinden eines zweiten Signaleingangsendes mit einem ersten Signalausgangsende gemäß der ersten Signalschaltanweisung, sodass eine Hauptsteuereinheit (130) über die erste Schnittstelle (180) eine Datensicherungsanweisung empfängt, die von der Debugging-Vorrichtung (200) gesendet wird;
wenn die Datensicherungsanweisung empfangen wird, Senden einer zweiten Signalschaltanweisung von der Hauptsteuereinheit (130) an einen zweiten MUX (160) und Senden einer dritten Signalschaltanweisung an einen dritten MUX (170);
Empfangen, in dem zweiten MUX (160), der zweiten Signalschaltanweisung und Verbinden eines vierten Signaleingangsendes mit einem zweiten Signalausgangsende gemäß der zweiten Signalschaltanweisung;
Empfangen, in dem dritten MUX (170), der dritten Signalschaltanweisung und Verbinden eines sechsten Signaleingangsendes mit einem dritten Signalausgangsende gemäß der dritten Signalschaltanweisung; und
Empfangen, in einer Speicherkomponente (110), einer Eingabe/Ausgabe-Anweisung, E/A-Anweisung, die von der Debugging-Vorrichtung (200) gesendet wird, und Durchführen einer Datensicherungsverarbeitung gemäß der E/A-Anweisung.

8. Verfahren nach Anspruch 7, wobei, wenn die Speicherkomponente (110) eine Speicherkomponente (110) eines Busses und einer Schnittstelle eines Standard-PCIe-Typs ist, das Benutzerendgerät (100) ferner einen Taktwähler und einen vierten MUX umfasst, und wobei das Verfahren ferner umfasst:
wenn die Datensicherungsanweisung empfangen wird, Senden einer vierten Signalschaltanweisung von der Hauptsteuereinheit (130) an den Taktwähler und Senden einer fünften Signalschaltanweisung an den vierten MUX;
Empfangen, in dem Taktwähler, der vierten Signalschaltanweisung und Verbinden eines achten Signaleingangsendes mit einem vierten Signalausgangsende gemäß der vierten Signalschaltanweisung;
Empfangen, in dem vierten MUX, der fünften Signalschaltanweisung und Verbinden eines zehnten Signaleingangsendes mit einem fünften Signalausgangsende gemäß der fünften Signalschaltanweisung; und
Empfangen, in der Speicherkomponente (110), eines Taktsignals, das von der Debugging-Vorrichtung (200) gesendet wird, um eine Taktsynchronisation zwischen der Speicherkomponente (110) und der Debugging-Vorrichtung (200) zu implementieren.

9. Verfahren nach Anspruch 7, wobei das Benutzerendgerät (100) ferner eine Eingangskomponente für Authentifizierungsinformationen umfasst, die mit der Hauptsteuereinheit (130) verbunden ist, und wobei das Verfahren ferner umfasst:
wenn die Datensicherungsanweisung empfangen wird, Senden einer Authentifizierungsanforderungsanweisung von der Hauptsteuereinheit (130) an die Authentifizierungsinformationseingabekomponente;
wenn die Authentifizierungsanforderungsanweisung empfangen wird, Sammeln, durch die Eingangskomponente für Authentifizierungsinformationen, von Authentifizierungsinformationen eines Benutzers und Senden einer Authentifizierungsantwortanweisung an die Hauptsteuereinheit (130), wobei die Authentifizierungsantwortanweisung die Authentifizierungsinformationen mitführt; und
wenn die Authentifizierungsantwortanweisung empfangen wird, Durchführen, durch die Hauptsteuereinheit (130), einer Authentifizierung des Benutzers basierend auf den Authentifizierungsinformationen und auf vorab gespeicherten Benutzerinformationen, und wenn die Authentifizierung erfolgreich ist, Senden der zweiten Signalschaltanweisung an den zweiten MUX (160) und Senden der dritten Signalschaltanweisung an den dritten MUX (170).

10. Datensicherungsverfahren, wobei das Verfahren in dem Benutzerendgerät (100) nach einem der Ansprüche 4 bis 6 angewandt wird und wobei das Verfahren umfasst:
wenn eine Datensicherungsanforderungsanweisung eines Benutzers erkannt wird, Senden einer ersten Signalschaltanweisung von der Hauptsteuereinheit (130) an einen ersten Multiplexer, MUX (150), und Senden einer zweiten Signalschaltanweisung an einen zweiten MUX (160);
Empfangen, in dem ersten MUX (150), der ersten Signalschaltanweisung und Verbinden eines zweiten Signaleingangsendes mit einem ersten Signalausgangsende gemäß der ersten Signalschaltanweisung;
Empfangen, in dem zweiten MUX (160), der zweiten Signalschaltanweisung und Verbinden eines vierten Signaleingangsendes mit einem zweiten Signalausgangsende gemäß der zweiten Signalschaltanweisung; und
wenn das zweite Signaleingangsende des ersten MUX (150) mit dem ersten Signalausgangsende des ersten MUX (150) verbunden ist und das vierte Signaleingangsende des zweiten MUX (160) mit dem zweiten Signalausgangsende des zweiten MUX (160) verbunden ist, Senden einer Eingabe/Ausgabe-Anweisung, E/A-Anweisung, von einer Schnittstellensteuereinheit an eine Speicherkomponente (110), um eine Datensicherungsverarbeitung durchzuführen.

11. Verfahren nach Anspruch 10, wobei, wenn die Speicherkomponente (110) eine Speicherkomponente (110) eines Busses und einer Schnittstelle eines Standard-PCIe-Typs ist, das Benutzerendgerät (100) ferner einen Taktwähler umfasst, und wobei das Verfahren ferner umfasst:
Senden einer dritten Signalschaltanweisung von der Hauptsteuereinheit (130) an den Taktwähler, wenn eine Datensicherungsanweisung empfangen wird;
Empfangen, in dem Taktwähler, der dritten Signalschaltanweisung und Verbinden eines sechsten Signaleingangsendes mit einem dritten Signalausgangsende gemäß der dritten Signalschaltanweisung; und
Empfangen, in der Speicherkomponente (110), eines Taktsignals, das von der Schnittstellensteuereinheit gesendet wird, um eine Taktsynchronisation zwischen der Speicherkomponente (110) und der Schnittstellensteuereinheit zu implementieren.

12. Verfahren nach Anspruch 10, wobei das Benutzerendgerät (100) ferner eine Eingangskomponente für Authentifizierungsinformationen umfasst, die mit der Hauptsteuereinheit (130) verbunden ist, und wobei das Verfahren ferner umfasst:
wenn eine Datensicherungsanweisung empfangen wird, Senden einer Authentifizierungsanforderungsanweisung von der Hauptsteuereinheit (130) an die Authentifizierungsinformationseingabekomponente;
wenn die Authentifizierungsanforderungsanweisung empfangen wird, Sammeln, durch die Eingangskomponente für Authentifizierungsinformationen, von Authentifizierungsinformationen eines Benutzers und Senden einer Authentifizierungsantwortanweisung an die Hauptsteuereinheit (130), wobei die Authentifizierungsantwortanweisung die Authentifizierungsinformationen mitführt; und
wenn die Authentifizierungsantwortanweisung empfangen wird, Durchführen, durch die Hauptsteuereinheit (130), einer Authentifizierung des Benutzers basierend auf den Authentifizierungsinformationen und auf vorab gespeicherten Benutzerinformationen, und wenn die Authentifizierung erfolgreich ist, Senden der ersten Signalschaltanweisung an den ersten MUX (150) und Senden der zweiten Signalschaltanweisung an den zweiten MUX (160).

## Revendications

1. Terminal utilisateur (100), dans lequel le terminal utilisateur (100) comprend un composant de stockage (110), un contrôleur d'entrée/sortie E/S (120), un contrôleur principal (130), un premier contrôleur de canal de configuration CC (140), un premier multiplexeur MUX (150), un deuxième multiplexeur MUX (160), un troisième multiplexeur MUX (170) et une première interface (180), dans lequel
le premier contrôleur CC (140) est connecté à chacune de la première interface (180) et d'une première extrémité d'entrée de sélection de signal (151) du premier MUX (150), et est configuré pour envoyer une première instruction de commutation de signal au premier MUX (150) lors de la détection qu'un dispositif de débogage (200) est connecté à la première interface (180) du terminal utilisateur (100) ;
une première extrémité d'entrée de signal (152) du premier MUX (150) est connectée au contrôleur d'E/S (120), une deuxième extrémité d'entrée de signal (153) du premier MUX (150) est connectée au contrôleur principal (130), et une première extrémité de sortie de signal (154) du premier MUX (150) est connectée à la première interface (180) ; et le premier MUX (150) est configuré pour connecter la deuxième extrémité d'entrée de signal (153) à la première extrémité de sortie de signal (154) lors de la réception de la première instruction de commutation de signal, de sorte que le contrôleur principal (130) reçoit, par l'intermédiaire de la première interface (180), une instruction de sauvegarde de données envoyée par le dispositif de débogage (200) ;
le contrôleur principal (130) est connecté à chacune d'une deuxième extrémité d'entrée de sélection de signal (161) du deuxième MUX (160) et d'une troisième extrémité d'entrée de sélection de signal (171) du troisième MUX (170), et est configuré pour : lors de la réception de l'instruction de sauvegarde de données, envoyer une deuxième instruction de commutation de signal au deuxième MUX (160), et envoyer une troisième instruction de commutation de signal au troisième MUX (170) ;
une troisième extrémité d'entrée de signal (162) du deuxième MUX (160) est connectée au contrôleur d'E/S (120), une quatrième extrémité d'entrée de signal (163) du deuxième MUX (160) est connectée à une sixième extrémité d'entrée de signal (172) du troisième MUX (170), et une deuxième extrémité de sortie de signal (164) du deuxième MUX (160) est connectée au composant de stockage (110) ; et le deuxième MUX (160) est configuré pour connecter la quatrième extrémité d'entrée de signal (163) à la deuxième extrémité de sortie de signal (164) lors de la réception de la deuxième instruction de commutation de signal ;
une cinquième extrémité d'entrée de signal (173) du troisième MUX (170) est connectée au contrôleur d'E/S (120), et une troisième extrémité de sortie de signal (174) du troisième MUX (170) est connectée à la première interface (180) ; et le troisième MUX (170) est configuré pour connecter la sixième extrémité d'entrée de signal (172) à la troisième extrémité de sortie de signal (174) lors de la réception de la troisième instruction de commutation de signal ; et
le composant de stockage (110) est configuré pour : lorsque la quatrième extrémité d'entrée de signal (163) du deuxième MUX (160) est connectée à la deuxième extrémité de sortie de signal (164) du deuxième MUX (160), et la sixième extrémité d'entrée de signal (172) du troisième MUX (170) est connectée à la troisième extrémité de sortie de signal (174) du troisième MUX (170), recevoir une instruction d'E/S envoyée par le dispositif de débogage (200), et effectuer un traitement de sauvegarde de données selon l'instruction d'E/S.

2. Terminal d'utilisateur (100) selon la revendication 1, dans lequel lorsque le composant de stockage (110) est un composant de stockage (110) de type PCIe standard de bus et d'interface, le terminal d'utilisateur (100) comprend en outre un sélecteur d'horloge et un quatrième MUX, dans lequel
le contrôleur principal (130) est connecté à chacune d'une quatrième extrémité d'entrée de sélection de signal du sélecteur d'horloge et d'une cinquième extrémité d'entrée de sélection de signal du quatrième MUX, et est configuré pour : lors de la réception de l'instruction de sauvegarde de données, envoyer une quatrième instruction de commutation de signal au sélecteur d'horloge, et envoyer une cinquième instruction de commutation de signal au quatrième MUX ;
une septième extrémité d'entrée de signal du sélecteur d'horloge est connectée au contrôleur d'E/S, une huitième extrémité d'entrée de signal du sélecteur d'horloge est connectée à une dixième extrémité d'entrée de signal du quatrième MUX, et une quatrième extrémité de sortie de signal du sélecteur d'horloge est connectée au composant de stockage (110) ; et le sélecteur d'horloge est configuré pour connecter la huitième extrémité d'entrée de signal à la quatrième extrémité de sortie de signal lors de la réception de la quatrième instruction de commutation de signal ;
une neuvième extrémité d'entrée de signal du quatrième MUX est connectée au contrôleur d'E/S, et une cinquième extrémité de sortie de signal du quatrième MUX est connectée à la première interface (180) ; et le quatrième MUX est configurée pour connecter la dixième extrémité d'entrée de signal à la cinquième extrémité de sortie de signal lors de la réception de la cinquième instruction de commutation de signal ; et
le composant de stockage (110) est en outre configuré pour : lorsque la huitième extrémité d'entrée de signal du sélecteur d'horloge est connectée à la quatrième extrémité de sortie de signal du sélecteur d'horloge, et la dixième extrémité d'entrée de signal du quatrième MUX est connectée à la cinquième extrémité de sortie de signal du quatrième MUX, recevoir un signal d'horloge envoyé par le dispositif de débogage (200), pour mettre en œuvre une synchronisation d'horloge entre le composant de stockage (110) et le dispositif de débogage.

3. Terminal d'utilisateur (100) selon la revendication 1, dans lequel le terminal d'utilisateur (100) comprend en outre un composant d'entrée d'informations d'authentification connecté au contrôleur principal (130), dans lequel
le contrôleur principal (130) est en outre configuré pour : lors de la réception de l'instruction de sauvegarde de données, envoyer une instruction de demande d'authentification au composant d'entrée d'informations d'authentification ;
le composant d'entrée d'informations d'authentification est configuré pour : lors de la réception de l'instruction de demande d'authentification, collecter des informations d'authentification d'un utilisateur, et envoyer une instruction de réponse d'authentification au contrôleur principal (130), l'instruction de réponse d'authentification transportant les informations d'authentification ; et
le contrôleur principal (130) est en outre configuré pour : lors de la réception de l'instruction de réponse d'authentification, effectuer une authentification sur l'utilisateur sur la base des informations d'authentification et des informations d'utilisateur pré-stockées, et si l'authentification réussit, envoyer la deuxième instruction de commutation de signal au deuxième MUX (160), et envoyer la troisième instruction de commutation de signal au troisième MUX (170).

4. Terminal utilisateur (100), dans lequel le terminal utilisateur (100) comprend un composant de stockage (110), un contrôleur d'entrée/sortie E/S (120), un contrôleur principal (130), un contrôleur d'interface, un premier multiplexeur MUX (150), un deuxième multiplexeur MUX (160) et une première interface (180), dans lequel
le contrôleur principal (130) est connecté à chacune d'une première extrémité d'entrée de sélection de signal du premier MUX (150) et d'une deuxième extrémité d'entrée de sélection de signal du deuxième MUX (160), et est configuré pour : lors de la réception d'une instruction de demande de sauvegarde de données d'un utilisateur, envoyer une première instruction de commutation de signal au premier MUX (150), et envoyer une deuxième instruction de commutation de signal au deuxième MUX (160) ;
une première extrémité d'entrée de signal du premier MUX (150) est connectée au contrôleur d'E/S (120), une deuxième extrémité d'entrée de signal du premier MUX (150) est connectée au contrôleur d'interface, et une première extrémité de sortie de signal du premier MUX (150) est connectée au composant de stockage (110) ; et le premier MUX (150) est configuré pour connecter la deuxième extrémité d'entrée de signal à la première extrémité de sortie de signal lors de la réception de la première instruction de commutation de signal ;
une troisième extrémité d'entrée de signal du deuxième MUX (160) est connectée au contrôleur d'E/S (120), une quatrième extrémité d'entrée de signal du deuxième MUX (160) est connectée au contrôleur d'interface, et une deuxième extrémité de sortie de signal du deuxième MUX (160) est connectée à la première interface (180) ; et le deuxième MUX (160) est configuré pour connecter la quatrième extrémité d'entrée de signal à la deuxième extrémité de sortie de signal lors de la réception de la deuxième instruction de commutation de signal ; et
le contrôleur d'interface est configuré pour : lorsque la deuxième extrémité d'entrée de signal du premier MUX (150) est connectée à la première extrémité de sortie de signal du premier MUX (150), et que la quatrième extrémité d'entrée de signal du deuxième MUX (160) est connectée à la deuxième extrémité de sortie de signal du deuxième MUX (160), envoyer une instruction d'E/S au composant de stockage (110) pour effectuer un traitement de sauvegarde de données.

5. Terminal d'utilisateur (100) selon la revendication 4, dans lequel lorsque le composant de stockage (110) est un composant de stockage (110) de type PCIe standard de bus et d'interface, le terminal d'utilisateur (100) comprend en outre un sélecteur d'horloge, dans lequel
le contrôleur principal (130) est connecté à une troisième extrémité d'entrée de sélection de signal du sélecteur d'horloge, et est configuré pour envoyer une troisième instruction de commutation de signal au sélecteur d'horloge lors de la réception d'une instruction de sauvegarde de données ;
une cinquième extrémité d'entrée de signal du sélecteur d'horloge est connectée au contrôleur d'E/S (120), une sixième extrémité d'entrée de signal du sélecteur d'horloge est connectée au contrôleur d'interface, et une troisième extrémité de sortie de signal du sélecteur d'horloge est connectée au composant de stockage (110) ; et le sélecteur d'horloge est configuré pour connecter la sixième extrémité d'entrée de signal à la troisième extrémité de sortie de signal lors de la réception de la troisième instruction de commutation de signal ; et
le composant de stockage (110) est en outre configuré pour : lorsque la sixième extrémité d'entrée de signal du sélecteur d'horloge est connectée à la troisième extrémité de sortie de signal du sélecteur d'horloge, recevoir un signal d'horloge envoyé par le contrôleur d'interface, pour mettre en œuvre une synchronisation d'horloge entre le composant de stockage (110) et le contrôleur d'interface.

6. Terminal d'utilisateur (100) selon la revendication 4, dans lequel le terminal d'utilisateur (100) comprend en outre un composant d'entrée d'informations d'authentification connecté au contrôleur principal (130), dans lequel
le contrôleur principal (130) est en outre configuré pour : lors de la réception d'une instruction de sauvegarde de données, envoyer une instruction de demande d'authentification au composant d'entrée d'informations d'authentification ;
le composant d'entrée d'informations d'authentification est configuré pour : lors de la réception de l'instruction de demande d'authentification, collecter des informations d'authentification d'un utilisateur, et envoyer une instruction de réponse d'authentification au contrôleur principal (130), l'instruction de réponse d'authentification transportant les informations d'authentification ; et
le contrôleur principal (130) est en outre configuré pour : lors de la réception de l'instruction de réponse d'authentification, effectuer une authentification sur l'utilisateur sur la base des informations d'authentification et d'informations d'utilisateur pré-stockées, et si l'authentification réussit, envoyer la première instruction de commutation de signal au premier MUX (150), et envoyer la deuxième instruction de commutation de signal au deuxième MUX (160).

7. Procédé de sauvegarde de données, dans lequel le procédé est appliqué au terminal utilisateur (100) selon l'une quelconque des revendications 1 à 3, et le procédé comprend :
l'envoi, par un premier contrôleur de canal de configuration CC (140), d'une première instruction de commutation de signal à un premier multiplexeur MUX (150) lors de la détection qu'un dispositif de débogage (200) est connecté à une première interface (180) du terminal utilisateur (100) ;
la réception, par le premier MUX (150), de la première instruction de commutation de signal, et la connexion d'une deuxième extrémité d'entrée de signal à une première extrémité de sortie de signal selon la première instruction de commutation de signal, de sorte qu'un contrôleur principal (130) reçoit, par l'intermédiaire de la première interface (180), une instruction de sauvegarde de données envoyée par le dispositif de débogage (200) ;
lors de la réception de l'instruction de sauvegarde de données, l'envoi, par le contrôleur principal (130), d'une deuxième instruction de commutation de signal à un deuxième MUX (160), et l'envoi d'une troisième instruction de commutation de signal à un troisième MUX (170) ;
la réception, par le deuxième MUX (160), de la deuxième instruction de commutation de signal, et la connexion d'un quatrième extrémité d'entrée de signal à une deuxième extrémité de sortie de signal selon la deuxième instruction de commutation de signal ;
la réception, par le troisième MUX (170), de la troisième instruction de commutation de signal, et la connexion d'une sixième extrémité d'entrée de signal à une troisième extrémité de sortie de signal selon la troisième instruction de commutation de signal ; et
la réception, par un composant de stockage (110), d'une instruction d'entrée/sortie d'E/S envoyée par le dispositif de débogage (200), et la réalisation d'un traitement de sauvegarde de données selon l'instruction d'E/S.

8. Procédé selon la revendication 7, dans lequel lorsque le composant de stockage (110) est un composant de stockage (110) de type PCIe standard de bus et d'interface, le terminal d'utilisateur (100) comprend en outre un sélecteur d'horloge et un quatrième MUX ; et le procédé comprend en outre :
lors de la réception de l'instruction de sauvegarde de données, l'envoi, par le contrôleur principal (130), d'une quatrième instruction de commutation de signal au sélecteur d'horloge, et l'envoi d'une cinquième instruction de commutation de signal au quatrième MUX ;
la réception, par le sélecteur d'horloge, de la quatrième instruction de commutation de signal, et la connexion d'une huitième extrémité d'entrée de signal à une quatrième extrémité de sortie de signal selon la quatrième instruction de commutation de signal ;
la réception, par le quatrième MUX, de la cinquième instruction de commutation de signal, et la connexion d'une dixième extrémité d'entrée de signal à une cinquième extrémité de sortie de signal selon la cinquième instruction de commutation de signal ; et
la réception, par le composant de stockage (110), d'un signal d'horloge envoyé par le dispositif de débogage (200), pour mettre en œuvre une synchronisation d'horloge entre le composant de stockage (110) et le dispositif de débogage (200).

9. Procédé selon la revendication 7, dans lequel le terminal d'utilisateur (100) comprend en outre un composant d'entrée d'informations d'authentification connecté au contrôleur principal (130) ; et le procédé comprend en outre :
lors de la réception de l'instruction de sauvegarde de données, l'envoi, par le contrôleur principal (130), d'une instruction de demande d'authentification au composant d'entrée d'informations d'authentification ;
lors de la réception de l'instruction de demande d'authentification, la collecte, par le composant d'entrée d'informations d'authentification, d'informations d'authentification d'un utilisateur, et l'envoi d'une instruction de réponse d'authentification au contrôleur principal (130), l'instruction de réponse d'authentification transportant les informations d'authentification ; et
lors de la réception de l'instruction de réponse d'authentification, la réalisation, par le contrôleur principal (130), d'une authentification sur l'utilisateur sur la base des informations d'authentification et d'informations d'utilisateur pré-stockées, et si l'authentification réussit, l'envoi de la deuxième instruction de commutation de signal au deuxième MUX (160), et l'envoi de la troisième instruction de commutation de signal au troisième MUX (170).

10. Procédé de sauvegarde de données, dans lequel le procédé est appliqué au terminal utilisateur (100) selon l'une quelconque des revendications 4 à 6, et le procédé comprend :
lors de la détection d'une instruction de demande de sauvegarde de données d'un utilisateur, l'envoi, par un contrôleur principal (130), d'une première instruction de commutation de signal à un premier multiplexeur MUX (150), et l'envoi d'une deuxième instruction de commutation de signal à un deuxième MUX (160) ;
la réception, par le premier MUX (150), de la première instruction de commutation de signal, et la connexion d'une deuxième extrémité d'entrée de signal à une première extrémité de sortie de signal selon la première instruction de commutation de signal ;
la réception, par le deuxième MUX (160), de la deuxième instruction de commutation de signal, et la connexion d'une quatrième extrémité d'entrée de signal à une deuxième extrémité de sortie de signal selon la deuxième instruction de commutation de signal ; et
lorsque la deuxième extrémité d'entrée de signal du premier MUX (150) est connectée à la première extrémité de sortie de signal du premier MUX (150), et que la quatrième extrémité d'entrée de signal du deuxième MUX (160) est connectée à la deuxième extrémité de sortie de signal du deuxième MUX (160), l'envoi, par un contrôleur d'interface, d'une instruction d'entrée/sortie E/S à un composant de stockage (110) pour effectuer un traitement de sauvegarde de données.

11. Procédé selon la revendication 10, dans lequel lorsque le composant de stockage (110) est un composant de stockage (110) de type PCIe standard de bus et d'interface, le terminal d'utilisateur (100) comprend en outre un sélecteur d'horloge, et le procédé comprend en outre :
l'envoi, par le contrôleur principal (130), d'une troisième instruction de commutation de signal au sélecteur d'horloge lors de la réception d'une instruction de sauvegarde de données ;
la réception, par le sélecteur d'horloge, de la troisième instruction de commutation de signal, et la connexion d'une sixième extrémité d'entrée de signal à une troisième extrémité de sortie de signal selon la troisième instruction de commutation de signal ; et
la réception, par le composant de stockage (110), d'un signal d'horloge envoyé par le contrôleur d'interface, pour mettre en œuvre une synchronisation d'horloge entre le composant de stockage (110) et le contrôleur d'interface.

12. Procédé selon la revendication 10, dans lequel le terminal d'utilisateur (100) comprend en outre un composant d'entrée d'informations d'authentification connecté au contrôleur principal (130) ; et le procédé comprend en outre :
lors de la réception d'une instruction de sauvegarde de données, l'envoi, par le contrôleur principal (130), d'une instruction de demande d'authentification au composant d'entrée d'informations d'authentification ;
lors de la réception de l'instruction de demande d'authentification, la collecte, par le composant d'entrée d'informations d'authentification, d'informations d'authentification d'un utilisateur, et l'envoi d'une instruction de réponse d'authentification au contrôleur principal (130), l'instruction de réponse d'authentification transportant les informations d'authentification ; et
lors de la réception de l'instruction de réponse d'authentification, la réalisation, par le contrôleur principal (130), d'une authentification sur l'utilisateur sur la base des informations d'authentification et d'informations d'utilisateur pré-stockées, et si l'authentification réussit, l'envoi de la première instruction de commutation de signal au premier MUX (150), et l'envoi de la deuxième instruction de commutation de signal au deuxième MUX (160).
